# EUROPÄISCHE PATENTSCHRIFT

(11) **EP 3 928 618 B1**
(45) Veröffentlichungstag und Bekanntmachung des Hinweises auf die Patenterteilung: **15.01.2025**
(21) Anmeldenummer: 21185084.7
(22) Anmeldetag: 18.09.2014
(51) Int. Cl.: A01M 7/00

(54) **VORRICHTUNG ZUM AUSBRINGEN VON FLÜSSIGEN UND/ODER FESTEN WIRKSTOFFEN UND VERFAHREN ZUR STEUERUNG EINER SOLCHEN VORRICHTUNG**
DEVICE FOR DISPENSING FLUID AND/OR SOLID AGENTS AND METHOD FOR CONTROLLING THE DEVICE
DISPOSITIF D'EXTRACTION DE LIQUIDES ET/OU D'AGENTS ACTIFS SOLIDES ET PROCÉDÉ DE COMMANDE D'UN TEL DISPOSITIF

(30) Priorität: 18.09.2013 DE 102013110304
(43) Veröffentlichungstag der Anmeldung: 29.12.2021
(62) Teilanmeldung aus: 17203194.0
(73) Patentinhaber: HORSCH LEEB Application Systems GmbH, 94405 Landau an der Isar (DE)
(72) Erfinder: Leeb, Theodor, 94405 Landau an der Isar (DE); Hirthammer, Otto, 93128 Hirschling (DE)
(74) Vertreter: v. Bezold & Partner Patentanwälte - PartG mbB

(56) Entgegenhaltungen:
- DE-A1- 102007 045 846
- JP-A- 2008 029 261
- US-A1- 2008 051 255
- US-A1- 2011 282 554

## Beschreibung

Die vorliegende Erfindung betrifft eine Vorrichtung zum Ausbringen von festen Wirkstoffen gemäß dem Oberbegriff des unabhängigen Anspruchs 1 sowie ein Verfahren zur Bewegungssteuerung und/oder -regelung einer Vorrichtung zum Ausbringen von festen Wirkstoffen gemäß dem Oberbegriff des Anspruchs 12.

Feldspritzen und an Arbeitsmaschinen wie Traktoren angehängte Spritzgestänge weisen teilweise sehr große Arbeitsbreiten von mehr als zwanzig Metern auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben. Da die an den Auslegern angeordneten und nach unten gerichteten Düsen zur Ausbringung eines Spritzmittels, wie etwa eines Pflazenschutzmittels, jeweils einen definierten Spritzkegel aufweisen, ergibt sich aus einer veränderlichen Distanz der Düsen zum Boden eine ungleichmäßige Bedeckung des Ackers mit Spritzmittel. Auch steigt die Gefahr der Abdrift des Spritzmittels mit zunehmender Distanz der Spritzdüsen vom Boden stark an, da die fein verstäubten Tropfen bereits von geringen Luftbewegungen negativ beeinflusst werden.

Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, da bereits geringe Schrägstellungen des Spritzgestänges zu großen Abstandsdifferenzen der Düsen zum Boden führen.

Hierzu ist bekannt, ein Spritzgestänge um einen zentralen Punkt zumindest um eine Drehachse drehbar an einem Trägerfahrzeug aufzuhängen. Die Drehachse verläuft dabei vorzugsweise parallel zur Längsachse des Trägerfahrzeugs. Um eine gleichmäßige Ausbringung des Spritzmittels zu gewährleisten, muss der Abstand zwischen Oberkante des Bestandes und den Spritzdüsen konstant auf einen definierten Abstand geregelt werden. Auf horizontalen Landwirtschaftsflächen kann dies grundsätzlich durch eine Selbstnivellierung erreicht werden, bei der sich das Spritzgestänge selbst in der Horizontalen ausrichtet, indem der Schwerpunkt des Spritzgestänges unterhalb des zentralen Punkts vorgesehen wird und das Spritzgestänge beispielsweise frei pendelnd drehbar aufgehängt ist. Der gewünschte Effekt stellt sich jedoch nicht bei Landwirtschaftsflächen ein, die entlang eines Hangs verlaufen.

Um den Abstand zwischen Oberkante des Bestandes und den an einem um einen zentralen Punkt drehbar aufgehängten Spritzgestänge angeordneten Spritzdüsen bei beliebig verlaufenden Landwirtschaftsflächen konstant auf einen definierten Abstand zu regeln, ist daher bekannt, ein beispielsweise in einen gewünschten Abstand zum Boden angehobenes Spritzgestänge so um eine durch den zentralen Punkt laufende Drehachse zu drehen, dass dieser Abstand über die gesamte Arbeitsbreite optimiert wird. Hierzu muss ein Ausrichtungsänderungsdrehmoment um eine durch den zentralen Punkt laufende Drehachse auf das Spritzgestänge ausgeübt werden. Dies geschieht vermittels mindestens eines Aktors, welcher zumindest bedarfsweise eine ein Ausrichtungsänderungsdrehmoment um die Drehachse bewirkende Kraft oder ein Kräftepaar vom Trägerfahrzeug auf das Spritzgestänge überträgt, um dessen Ausrichtung zu verändern.

Dieses Ausrichtungsänderungsdrehmoment beschleunigt das Spritzgestänge in einer gewünschten Solldrehrichtung. Auch nach Beendigung der Einwirkung des Ausrichtungsänderungsdrehmomentes würde sich das Spritzgestänge ohne Gegenmaßnahmen weiterhin um die Drehachse drehen, da es bedingt durch das Massenträgheitsmoment seinen Drehimpuls beibehält. Um das Spritzgestänge wieder abzubremsen muss daher ein Bremsdrehmoment entgegengesetzt zum vorherigen Ausrichtungsänderungsdrehmoment eingeleitet werden. Dieses Bremsdrehmoment wirkt der durch das Ausrichtungsänderungsdrehmoment angestoßenen Drehbewegung entgegen und dämpft somit das System aus um den zentralen Punkt drehbar aufgehängtem Spritzgestänge.

Bisher werden zur Aufbringung des Bremsdrehmoments für gewöhnlich mechanische Dämpfer verwendet, die zwischen Trägerfahrzeug und Spritzengestänge angebracht sind. Angenommen, es tritt eine Relativbewegung zwischen Trägerfahrzeug und Gestänge in Form einer Drehung um die Drehachse auf, wirkt ein dazwischen angebrachter mechanischer Dämpfer der Relativdrehung bzw. der Drehbewegung des Gestänges entgegen und bremst dieses wie gewünscht ab. Dreht sich jedoch das Trägerfahrzeug beispielsweise aufgrund von Unebenheiten um die Drehachse und das Spritzgestänge steht still, entsteht ebenfalls eine Relativdrehung zwischen Trägerfahrzeug und Spritzgestänge. Ein mechanischer Dämpfer, der zwischen Trägerfahrzeug und Spritzgestänge angebracht ist, würde dieser Relativdrehung entgegengesetzt wirken und somit ein um die Drehachse wirkendes Drehmoment auf das Spritzgestänge übertragen, wodurch eine Kopplung zwischen Trägerfahrzeug und Spritzgestänge besteht.

Diese Kopplung besteht gleichermaßen, wenn als Basis für eine Regelung des Drehmoments ein Messsystem verwendet wird, welches einen Relativwinkel und/oder eine Relativdrehung zwischen Trägerfahrzeug und Spritzgestänge misst.

Darüber hinaus sind Messsysteme bekannt, die am Spritzgestänge angeordnete Neigungssensoren verwenden, um die Lage des Spritzgestänges zu bestimmen. Durch zeitliche Ableitung der Neigung kann die Drehgeschwindigkeit des Spritzgestänges unabhängig vom Trägerfahrzeug erhalten werden. Neigungssensoren liefern jedoch bei Querbeschleunigungen, wie sie beispielsweise bei Kurvenfahrt auftreten, eine fehlerhafte Neigung. Somit wird auch eine fehlerhafte Drehgeschwindigkeit berechnet.

Durch US 2011/0282554 A1 ist eine Vorrichtung zum Ausbringen von flüssigen Wirkstoffen bekannt. Die Vorrichtung umfasst:
- ein Trägerfahrzeug,
- ein am Trägerfahrzeug angeordnetes Spritzgestänge umfassend ein in seinem Abstand zum Boden veränderlich einstellbares Mittelteil sowie zwei an diesem um jeweils eigene parallel zu einer Längsachse des Trägerfahrzeugs verlaufende Drehachsen unabhängig voneinander beweglich angeordnete, seitlich des Trägerfahrzeugs abstehende Ausleger,
- an den beiden Auslegern angeordnete Abstandssensoren zur Erfassung der Positionen oder Abstände der Auslegerenden zum Boden,
- mindestens einen am Mittelteil zwischen den Auslegern angeordneten Abstandssensor zur Erfassung des Abstands des Mittelteils zum Boden,
- eine die Ausgangssignale der Sensoren zu Steuerungssignalen verarbeitende Regelungseinrichtung,
- jeweils einen auf einen der beiden Ausleger einwirkenden Aktor in Form eines Hydraulikzylinders zum individuellen Anheben und Absenken jeden Auslegerendes in Abhängigkeit von Steuerungssignalen der Regelungseinrichtung, sowie
- einen unabhängig vom Spritzgestänge am Trägerfahrzeug angeordneten, den Wankwinkel oder die Wankrate des Trägerfahrzeugs um dessen Längsachse erfassenden Drehwinkel- oder Drehratensensor.

Bei den Abstandssensoren kann es sich um LIDAR- (Light Detection And Ranging), RADAR- (RAdio Detection And Ranging) oder Ultraschallsensoren, oder um auf einem Interferenzmessverfahren oder auf Funkfrequenz basierende Sensoren, wie beispielsweise GPS-Sensoren handeln. Bei dem Drehwinkel- oder Drehratensensor kann es sich um ein Kreiselinstrument (Gyroskop) handeln. Um die Auslegerenden auf gleichbleibendem Abstand zum Boden zu halten wie das Mittelteil, wird zunächst anhand eines Vergleichs der Ausgangssignale der Abstandssensoren ein Höhenfehler der beiden Auslegerenden berechnet. Ist dieser Höhenfehler für eine oder für beide Auslegerenden ungleich Null, so wird ein Anfangssteuerungssignal erzeugt, um einen einem betroffenen Ausleger zugeordneten Aktor zu betätigen und das einen Höhenfehler aufweisende Auslegerende wieder auf den vorgegebenen Abstand zum Boden einzustellen. Wird hierbei einer der Ausleger angehoben, so folgt hieraus eine Wankbewegung des Trägerfahrzeugs in Richtung des anzuhebenden Auslegers, wodurch ohne weitere Maßnahmen der verbleibende Ausleger einen in einer Absenkung resultierenden Höhenfehler aufweisen würde. Damit ein sich aus Abstandssensoren, Regeleinrichtung und Aktoren zusammensetzender Regelkreis regelungstechnisch stabil ist, und sich beispielsweise nicht unkontrollierbar aufschaukelt und/oder zu einem seitlichen Umkippen des Trägerfahrzeugs führt, ist vorgesehen, vermittels der Regeleinrichtung ein einer Instabilität des Regelkreises entgegenwirkendes Kompensationssteuerungssignal anhand des Ausgangssignals des den Wankwinkel oder die Wankrate des Trägerfahrzeugs um dessen Längsachse erfassenden Drehwinkel- oder Drehratensensors zu erzeugen und ein anhand des Anfangssteuerungssignals und des Kompensationssteuerungssignals ermitteltes Steuerungssignal an die Aktoren auszugeben.

Durch WO 2012/146255 A1 ist ebenfalls eine Vorrichtung zum Ausbringen von flüssigen Wirkstoffen bekannt. Die Vorrichtung umfasst:
- ein Trägerfahrzeug,
- ein um eine parallel zu einer Längsachse des Trägerfahrzeugs verlaufende Drehachse beweglich am Trägerfahrzeug angeordnetes Spritzgestänge mit beidseits des Trägerfahrzeugs abstehenden Auslegern,
- einen oder mehrere an dem Spritzgestänge angeordnete Sensoren, um die Abstände der Ausleger zum Boden zu erfassen, wie etwa einen oder mehrere Beschleunigungssensoren, Gyroskope und/oder Abstandssensoren,
- eine die Ausgangssignale des einen oder der mehreren Sensoren zu Steuerungssignalen verarbeitende Regelungseinrichtung,
- eine Schwingungen des Spritzgestänges dämpfende Stabilisierungseinrichtung umfassend zwei entlang der beiden Ausleger verlaufende Führungen sowie jeweils einen entlang einer der Führungen verschiebbar angeordneten Klotz, und
- die Positionen der beiden Klötze entlang der Führungen in Abhängigkeit von Steuerungssignalen der Regelungseinrichtung beeinflussende Betätigungseinrichtung.
Als Antwort auf unerwünschte Vertikalbewegungen, welche in einem ungedämpften Regelkreis das Spritzgestänge zu Drehschwingungen um die Längsachse des Trägerfahrzeugs anregen können, ist eine Dämpfung und Kompensation durch eine Masseverlagerung anhand einer Verschiebung der Klötze entlang der beiden Ausleger vorgesehen. Als in die Steuerungssignale an die Betätigungseinrichtung einfließende Eingangsgröße der Regelungseinrichtung dienen Ausgangssignale von Vertikalschwingungen des Spritzgestänges erfassenden, an den Auslegern befestigten Beschleunigungssensoren. Eine Regelung eines gleichbleibenden Abstands der Ausleger zum Boden ist nicht offenbart.

Durch DE 10 2007 045 846 A1 ist eine Vorrichtung zum Ausbringen von flüssigen Wirkstoffen bekannt. Die Vorrichtung umfasst:
- ein Trägerfahrzeug,
- ein um eine parallel zu einer Längsachse des Trägerfahrzeugs verlaufende Drehachse beweglich an einem höhenverstellbaren Parallelogrammgestänge am Trägerfahrzeug angeordnetes Spritzgestänge,
- einen an dem Spritzgestänge angeordneten Beschleunigungssensor,
- einen an dem Parallelogrammgestänge angeordneten Beschleunigungssensor, sowie
- einen an dem Trägerfahrzeug angeordneten ersten Referenzsensor in Form eines Beschleunigungssensors, und
- einen im Bereich eines Rahmens des Trägerfahrzeugs angeordneten zweiten Referenzsensor in Form eines Gyrostaten oder Drehratensensors,
- eine die Ausgangssignale des einen oder der mehreren Sensoren zu Steuerungssignalen verarbeitende Regelungseinrichtung,
- einen in Abhängigkeit von Steuerungssignalen der Regelungseinrichtung die Drehlage des Spritzgestänges beeinflussenden Aktor in Form eines Hydraulikzylinders, sowie
- einen in Abhängigkeit von Steuerungssignalen der Regelungseinrichtung den Abstand des Parallelogrammgestänge zum Boden beeinflussenden Aktor in Form eines Hydraulikzylinders.

Die von der Regelungseinrichtung erzeugten Steuerungssignale vermeiden Positionsänderungen einer einmal manuell eingestellten Position und Ausrichtung des Spritzgestänges beim Bremsen, Beschleunigen, Ein- bzw. Ausfedern des Trägerfahrzeugs oder auch beim Überfahren von Bodenunebenheiten. Sich anhand der unterschiedlichen Positionierung der Beschleunigungssensoren und der Referenzsensoren einschleichende Fehler können durch die Referenzsensoren genauer kompensiert werden. Eine Regelung eines gleichbleibenden Abstands des Spritzgestänges zum Boden ist nicht offenbart.

Der Vollständigkeit halber sei erwähnt, dass darüber hinaus relativ zueinander verstellbaren Segmenten bestehende Spritzgestänge bekannt sind, um bei sehr großen Arbeitsbreiten eine abschnittsweise Anpassung an die Bodenkontur zu ermöglichen. Ein Spritzgestänge, welches über einen aus Segmenten zusammengesetzten Ausleger verfügt, ist durch DE 32 02 569 A1 bekannt. Hierbei sind einzelne Segmente miteinander verbunden, wobei die Bewegung der einzelnen Segmente relativ zueinander passiv erfolgt. Für diesen Mechanismus ist ein stützendes Element auf der Außenseite eines jeden Auslegers notwendig, um den Schwenkvorgang zu ermöglichen. Ein weiteres relevantes Stand der Technik Dokument ist die JP 2008 029261 A (KUBOTA KK).

Aufgabe der Erfindung ist eine Vorrichtung zum Ausbringen von flüssigen und/oder festen Wirkstoffen mit einem Trägerfahrzeug und mindestens einem zumindest um eine vorzugsweise parallel zu einer Längsachse des Trägerfahrzeugs verlaufende Drehachse schwenkbar angeordneten Gestänge mit beidseits des Trägerfahrzeugs abstehenden Auslegern, wie beispielsweise eine Feldspritze, zu entwickeln, welche auch bei unebenen Böden und sich bewegendem oder wankendem Trägerfahrzeug eine möglichst exakte Beibehaltung der Abstände der Ausleger gegenüber der Bodenoberfläche ermöglicht, sowie ein Verfahren zur Steuerung einer solchen Vorrichtung anzugeben, mit dessen Hilfe auch bei unebenen Böden und sich bewegendem oder wankendem Trägerfahrzeug eine möglichst exakte Beibehaltung der Abstände der Ausleger gegenüber der Bodenoberfläche ermöglicht wird.

Die Aufgabe wird jeweils gelöst durch die Merkmale der unabhängigen Ansprüche.

Merkmale vorteilhafter Weiterbildungen der Erfindung ergeben sich aus den abhängigen Ansprüchen, dem nachfolgenden allgemeinen Beschreibungsteil, der Zeichnungen sowie dem zugehörigen Figurenbeschreibungsteil.

Ein erster Gegenstand der Erfindung betrifft demnach eine Vorrichtung zum Ausbringen von festen Wirkstoffen. Die Vorrichtung umfasst:
- ein Trägerfahrzeug,
- mindestens ein zumindest um eine vorzugsweise parallel zu einer Längsachse des Trägerfahrzeugs verlaufende Drehachse schwenkbar angeordnetes Gestänge, wie beispielsweise ein Spritzgestänge, mit beidseits des Trägerfahrzeugs abstehenden Auslegern sowie an diesem angeordneten, mit einem Speicher für mindestens einen flüssigen und/oder festen Wirkstoff verbundenen und/oder verbindbaren Ausbringungsmitteln, wie beispielsweise mit einem Spritzmitteltank verbundenen und/oder verbindbaren Spritzdüsen,
- mindestens eine Sensoranordnung zur Erfassung einer Drehgeschwindigkeit des Gestänges um die Drehachse in Bezug auf eine Referenzebene,
- mindestens eine Sensoranordnung zur Erfassung einer Drehlage des Gestänges um die Drehachse in Bezug auf die Referenzebene,
- eine Ausgangssignale der Sensoranordnungen zu Steuerungssignalen verarbeitende Regelungseinrichtung,
- zumindest einen in Abhängigkeit von Steuerungssignalen der Regelungseinrichtung die Drehlage des Gestänges um die Drehachse in Bezug auf das Trägerfahrzeug beeinflussenden, auch als Aktuator bezeichneten Aktor beispielsweise in Form eines oder mehrerer Hydraulikzylinder, welcher Steuerungssignale in mechanische Bewegung oder eine andere physikalische Größe, wie beispielsweise Druck umsetzt und damit eine ein Drehmoment auf das Gestänge ausübende Kraft oder ein ein Drehmoment auf das Gestänge ausübendes Kräftepaar erzeugt,
wobei die Regelungseinrichtung zur Bestimmung einer Drehlage des Gestänges um die Drehachse in Bezug auf eine beispielsweise mit der Referenzebene übereinstimmende Anfangsausrichtung:
- durch zeitliche Intergration der Drehgeschwindigkeit die Drehlage des Gestänges in Bezug auf die Referenzebene berechnet, wodurch einerseits weder das Trägerfahrzeug, noch translatorische Beschleunigungen die Berechnung der Drehlage störend beeinflussen, jedoch andererseits Messfehler ebenfalls integriert werden und eine nachfolgend als Winkeldrift bezeichnete Drift der Drehlage verursachen, und
- die anhand der Drehgeschwindigkeit berechnete Drehlage des Gestänges zur Kompensation der Winkeldrift mit der erfassten Drehlage des Gestänges zur Bestimmung der momentanen Drehlage des Gestänges in Bezug auf die Referenzebene fusioniert, um hieraus ein das Gestänge aus dessen momentaner Drehlage in eine Soll-Drehlage in Bezug auf die Referenzebene rückführendes Steuerungssignal zu erzeugen.

Durch eine zeitliche Integration der als Drehgeschwindigkeit bezeichneten Drehrate wird ein eine Drehlage des Gestänges in Bezug auf die Referenzebene wiedergebender Drehwinkel erhalten. Störungen durch das Trägerfahrzeug oder durch translatorische Beschleunigungen haben hierbei keinen Einfluss auf die Berechnung, wohingegen Messfehler ebenfalls integriert werden und eine Winkeldrift des Drehwinkels verursachen.

Eine Messung der Drehlage in Bezug auf die Referenzebene, beispielsweise durch eine Messung der Relativdrehung zwischen Trägerfahrzeug und Gestänge oder eine Messung eines Neigungswinkels zur Erdbeschleunigung weist zwar den Nachteil des Einflusses von Störungen durch Drehbewegungen des Trägerfahrzeuges oder durch translatorische Beschleunigungen, wie sie etwa bei Kurvenfahrt auftreten auf, dem jedoch der Vorteil gegenübersteht, dass diese Art der Erfassung der Drehlage keinem Winkeldrift unterliegt.

Durch eine Fusionierung der berechneten und der als erfasste Drehlage bezeichneten gemessenen Drehlage wird die momentane Drehlage in Bezug auf die Referenzebene sehr genau bestimmt, wobei nur die Vorteile der jeweiligen Messmethoden genutzt werden, ohne deren Nachteile in Kauf nehmen zu müssen.

Vorteile gegenüber dem Stand der Technik sind der Erhalt eines anhand der mindestens einen Sensoranordnung zur Erfassung einer Drehgeschwindigkeit des Gestänges um die Drehachse in Bezug auf eine Referenzebene, der mindestens eine Sensoranordnung zur Erfassung einer Drehlage des Gestänges um die Drehachse in Bezug auf die Referenzebene, und der die Ausgangssignale der Sensoranordnungen zu Steuerungssignalen verarbeitenden Regelungseinrichtung bestehendes Messsystems, welches die momentane Drehlage und Drehbewegungen des Gestänges bezogen auf die Referenzebene unabhängig vom Trägerfahrzeug wiedergibt und hieraus Steuerungssignale zur Regelung einer konstanten Ausrichtung des Gestänges in Bezug auf die Referenzebene erzeugt. Zur Bestimmung der momentanen Drehlage werden zwei Messsysteme die auf unterschiedliche physikalischen Grundlagen basieren verwendet und fusioniert. Dadurch werden jeweils die Nachteile jeder Messmethode unterdrückt.

Die mindestens eine Sensoranordnung zur Erfassung einer Drehgeschwindigkeit des Gestänges um die Drehachse in Bezug auf eine Referenzebene kann einen am Gestänge angeordneten, die Drehgeschwindigkeit des Gestänges erfassenden Drehratensensor umfassen.

Zur Erfassung der Drehgeschwindigkeit wird hierbei ein Drehratensensor eingesetzt, der direkt auf dem Gestänge montiert ist. Drehbewegungen des Trägerfahrzeuges haben somit keinen Einfluss auf die Bestimmung der Drehgeschwindigkeit des Gestänges. Ein der Messgröße proportionales oder diese wiederspiegelndes Ausgangssignal eines Drehratensensors entspricht somit der Drehbewegung des Gestänges bezogen auf eine beliebige Referenzebene, beispielsweise bezogen auf die Erdoberfläche bzw. orthogonal zur Erdbeschleunigung oder eine ein gemitteltes Bodenprofil wiederspiegelnde, langfristige Ausrichtung des Trägerfahrzeugs.

Diese Messgröße bzw. ein dieser Messgröße proportionales oder diese wiederspiegelndes, in die Steuerungssignale an den oder die Aktoren einfließende Eingangsgröße der Regelungseinrichtung dienendes Ausgangssignal eines Drehgeschwindigkeiten des Gestänges erfassenden Drehratensensors kann verwendet werden, um eine aktive Dämpfung des Gestänges in Form eines aktiv eingeleiteten Bremsmoments zu erhalten.

Alternativ oder zusätzlich kann die mindestens eine Sensoranordnung zur Erfassung einer Drehgeschwindigkeit des Gestänges um die Drehachse in Bezug auf eine Referenzebene mindestens einen am Trägerfahrzeug angeordneten Drehratensensor umfassen, um Drehgeschwindigkeiten des Trägerfahrzeugs wenigstens um dessen Längsachse und damit Störbewegungen darstellende Drehbewegungen des Trägerfahrzeugs zu messen.

Zusätzlich kann die mindestens eine Sensoranordnung zur Erfassung einer Drehgeschwindigkeit des Gestänges um die Drehachse in Bezug auf eine Referenzebene hierbei mindestens einen die Relativdrehung zwischen Trägerfahrzeug und Gestänge erfassenden Drehwinkelsensor oder Drehwinkelgeschwindkeitssensor umfassen, so dass aus den beiden Messwerten Drehgeschwindigkeit des Trägerfahrzeugs in Bezug auf dessen Längsachse sowie Relativdrehung zwischen Trägerfahrzeug und Gestänge dann die absolute Drehgeschwindigkeit des Gestänges um die Drehachse ermittelt werden kann.

Alternativ oder zusätzlich zu einem Drehratensensor kann die mindestens eine Sensoranordnung zur Erfassung einer Drehgeschwindigkeit des Gestänges um die Drehachse in Bezug auf eine Referenzebene einen Drehbeschleunigungssensor umfassen. Durch zeitliche Integration dessen Ausgangssignals kann ein Maß für die Drehgeschwindigkeit gewonnen werden.

Alternativ oder zusätzlich zu einem Drehratensensor und/oder einem Drehbeschleunigungssensor kann die mindestens eine Sensoranordnung zur Erfassung einer Drehgeschwindigkeit des Gestänges um die Drehachse in Bezug auf eine Referenzebene typischerweise mindestens zwei im Bereich der Ausleger des Gestänges, beispielsweise an deren Enden, angeordnete Beschleunigungssensoren umfassen. Es sei an dieser Stelle jedoch erwähnt, dass auch bereits ein Sensor ausreichen kann, der im Bereich eines der Ausleger des Gestänges, bspw. an einem Ende, angeordnet sein kann. Dessen Ausgangssignal oder die Ausgangssignale mehrerer Sensoren widerspiegeln die translatorischen Beschleunigungen an den Enden der Ausleger. Die Differenz der Ausgangssignale zweier an den gegenüberliegenden Enden der Ausleger angeordneter Beschleunigungssensoren multipliziert mit der Gestängebreite ergibt die Drehbeschleunigungen, durch deren zeitliche Integration wiederum die Drehgeschwindigkeit erhalten wird.

Zusammengefasst ist demnach ersichtlich, dass die Mittel zur Bestimmung einer Drehgeschwindigkeit des Gestänges um die Drehachse in Bezug auf eine Referenzebene einen oder mehrere am Gestänge angeordnete Inertialsensoren umfassen können.

Inertialsensoren dienen der Messung von Beschleunigungen und Drehraten. Durch Kombination mehrerer Inertialsensoren in einer auch als "inertial measurement unit", IMU, bezeichneten inertialen Messeinheit können Beschleunigungen in bis zu sechs Freiheitsgraden, die ein starrer Körper aufweisen kann (drei translatorische und drei rotatorische Freiheitsgrade) gemessen werden. Eine IMU ist Hauptbestandteil eines auch als inertiales Navigationssystem bezeichneten Trägheitsnavigationssystems.

Beispielse für Inertialsensoren sind Beschleunigungssensoren und Drehratensensoren.

Ein Drehratensensor erfasst die Rotations- beziehungsweise Drehgeschwindigkeit eines Körpers um eine vorgegebene Dreh- oder Schwenkachse, wobei ein Ausgangssignal eines Drehratensensors einer erfassten Drehgeschwindigkeit vorzugsweise eindeutig proportional ist.

Durch Integration der Drehgeschwindigkeit über ein Zeitintervall lässt sich daraus ableiten, um welchen Winkel sich ein Körper innerhalb des Zeitintervalls gedreht hat. Die Drehraten um die drei Raumachsen werden als:
- Gierrate (Drehung um Hochachse, engl. yaw)
- Nickrate (Drehung um Querachse, engl. pitch)
- Wankrate (bei nicht landgestützten Fahrzeugen auch Rollrate (Drehung um Längsachse, engl. roll)
bezeichnet.

Das Messprinzip basiert im Wesentlichen auf zwei Messprinzipien, zum Einen der Corioliskraft, die auf ein mechanisch bewegtes System wirkt, und zum Anderen dem Sagnac-Effekt, der bei Licht beobachtet wird.

Beispiele für die Corioliskraft nutzende mechanische, bewegte Systeme sind:
- Focaultsches Pendel,
- Kreisekompass,
- Dynamically Tuned Gyro (DTG), Messfehler <1°/h,
- Vibrationskreisel, Messfehler <10°/h,
- Schwingkölbchen.

Beispiele für den Sagnac-Effekt nutzende optische Systeme sind:
- Ringlaser (RLG), Messfehler <0,001°/h,
- Faserkreisel (FOG), Messfehler <1°/h.

Inertiale Messeinheiten beinhalten in der Regel die folgenden Sensorarten:
- Drei orthogonal angeordnete Beschleunigungssensoren (auch als Translationssensoren bezeichnet) detektieren die lineare Beschleunigung in x- bzw. y-bzw. z-Achse. Daraus kann mit zweimaliger Integration die translatorische Bewegung berechnet werden.
- Drei orthogonal angeordnete Drehratensensoren (auch als Gyroskopische Sensoren bezeichnet) messen die Winkelgeschwindigkeit um die x- bzw. y- bzw. z-Achse. Daraus kann mit einfacher Integration die Rotationsbewegung berechnet werden.

Zur Bestimmung der Integrationskonstanten und/oder zur Verbesserung der Genauigkeit und/oder um eine Drift der Sensoren zu korrigieren, können zusätzlich beispielsweise Magnetfeldsensoren, wie etwa Kompasssensoren, und/oder zum Empfang von Signalen eines auch als Global Navigation Satellite System, GNSS, bezeichneten, bestehenden und/oder künftigen globalen Navigationssatellitensystems, wie beispielsweise:
- GPS (Global Positioning System) der Vereinigten Staaten von Amerika, und/oder
- GLONASS (GLObal NAvigation Satellite System) der Russischen Föderation, und/oder
- Galileo der Europäischen Union, und/oder
- Beidou der Volksrepublik China
vorgesehen sein.

Die mindestens eine Sensoranordnung zur Erfassung einer Drehlage des Gestänges um die Drehachse in Bezug auf die Referenzebene kann mindestens einen eine Relativdrehung zwischen Trägerfahrzeug und Gestänge bezogen auf die Drehachse erfassenden Sensor umfassen.

Wenigstens ein Sensor zur Erfassung einer Relativdrehung zwischen Trägerfahrzeug und Gestänge kann ein zwischen dem Gestänge und dem Trägerfahrzeug angeordneter Drehwinkelsensor sein.

Alternativ oder zusätzlich kann eine Erfassung einer Relativdrehung zwischen Trägerfahrzeug und Gestänge anhand wenigstens eines einen Winkel zwischen dem Trägerfahrzeug und der Referenzebene erfassenden Neigungssensors und anhand zumindest eines einen Winkel zwischen dem Gestänge und der Referenzebene erfassenden Neigungssensors verwirklicht sein, wobei die Differenz des von den Sensoren erfassten Winkels zwischen dem Trägerfahrzeug und der Referenzebene und des Winkels zwischen dem Gestänge und der Referenzebene einer Relativdrehung zwischen Trägerfahrzeug und Gestänge proportional ist.

Anhand einer Fusionierung der vermittels einer sensorisch erfassten Drehgeschwindigkeit berechneten Drehlage des Gestänges mit einer vermittels eines Drehwinkelsensors direkt oder durch Differenzbildung der Neigungen des Gestänges und des Trägerfahrzeugs gegenüber der Referenzebene indirekt sensorisch erfassten Relativdrehung zwischen Trägerfahrzeug und Gestänge kann Bezug genommen werden auf eine einer langfristigen Ausrichtung des Trägerfahrzeugs entsprechende, ein gemitteltes Bodenprofil wiederspiegelnde, Referenzebene.

Die mindestens eine Sensoranordnung zur Erfassung einer Drehlage des Gestänges um die Drehachse in Bezug auf die Referenzebene kann alternativ oder zusätzlich zumindest einen einen Winkel zwischen dem Gestänge und der Referenzebene erfassender Neigungssensor umfassen.

Anhand einer Fusionierung der anhand einer Drehgeschwindigkeit berechneten Drehlage des Gestänges mit einer anhand einer Erfassung eines Winkels zwischen dem Gestänge und der Referenzebene erfassten Drehlage des Gestänges kann Bezug genommen werden auf eine einem künstlichen Horizont entsprechende Referenzebene.

Neigungssensoren haben zwar den Nachteil, dass sie querbeschleunigungsbehaftet sind. Dieser Nachteil wird jedoch durch die Fusionierung mit der anhand einer Drehgeschwindigkeit berechneten Drehlage des Gestänges kompensiert.

Zusammengefasst kann es sich demnach bei der Referenzebene entweder um einen künstlichen Horizont handeln, wobei die mindestens eine Sensoranordnung zur Erfassung einer Drehlage des Gestänges um die Drehachse in Bezug auf eine Referenzebene bevorzugt einen Neigungssensor umfasst, oder um eine langfristige Ausrichtung des Trägerfahrzeugs, wobei die mindestens eine Sensoranordnung zur Erfassung einer Drehlage des Gestänges um die Drehachse in Bezug auf eine Referenzebene bevorzugt eine Erfassung einer Relativdrehung zwischen Trägerfahrzeug und Gestänge beispielsweise anhand eines den Winkel zwischen Gestänge und Trägerfahrzeug erfassenden Drehwinkelsensors umfasst.

Zur Bestimmung der momentanen Drehlage des Gestänges um die Drehachse in Bezug auf die Referenzebene anhand einer Fusionierung der anhand einer Drehgeschwindigkeit berechneten Drehlage des Gestänges mit der direkt oder durch Differenzbildung indirekt sensorisch erfassten Drehlage des Gestänges ist die Regelungseinrichtung vorzugsweise mit eine Kalman-Filterung ausführenden Mitteln versehen.

Alternativ oder zusätzlich kann die Regelungseinrichtung zur Bestimmung der momentanen Drehlage des Gestänges um die Drehachse in Bezug auf die Referenzebene anhand einer Fusionierung der vermittels einer Drehgeschwindigkeit berechneten Drehlage des Gestänges mit der direkt oder durch Differenzbildung indirekt sensorisch erfassten Drehlage des Gestänges mit Mitteln zur Tiefpassfilterung der sensorisch erfassten Drehlage sowie Mittel zum Vergleich der tiefpassgefilterten sensorisch erfassten Drehlage unter ständigem Abgleich auf Null mit der anhand einer Drehgeschwindigkeit berechneten Drehlage ausgestattet sein, um die Winkeldrift zu kompensieren.

Die Regelungseinrichtung regelt und/oder steuert mittels mindestens eines beispielsweise wenigstens einen Hydraulikzylinder umfassenden Aktors die Drehlage des Gestänges um die Drehachse längs zur Fahrtrichtung des Trägerfahrzeugs.

Die Regelungseinrichtung kann einen manuellen Betriebszustand erlauben, bei dem der die Drehlage des Gestänges um die Drehachse in Bezug auf das Trägerfahrzeug beeinflussende Aktor keine aktive Steuerung vornimmt und das Gestänge beispielsweise nahezu stellkraftfrei geführt wird.

Im manuellen Betriebszustand folgt wenigstens ein Teil des Gestänges, beispielsweise zumindest ein zwischen den Auslegern angeordnetes Mittelteil, über einen längeren Zeitraum betrachtet der Bewegung des Trägerfahrzeugs, da dieses im Grunde genommen dem Ackerrelief und damit der Kontur des Felds folgt.

Hochfrequente Wankbewegungen des Trägerfahrzeugs sollen aber keinen Einfluss auf die Drehlage des Gestänges in Bezug auf eine der langfristigen Ausrichtung des Trägerfahrzeugs oder einem künstlichen Horizont entsprechende Referenzebene haben.

Die Regelungseinrichtung erlaubt darüber hinaus einen automatischen Betriebszustand, bei dem der Aktor eine aktive Bewegung durchführt um somit die Drehlage des Gestänges in Bezug auf die Referenzebene anzupassen.

Die Erfindung erlaubt eine sehr exakte Bestimmung einer momentanen Drehlage des Gestänges bezogen auf eine Referenzebene. Dies ist im Vergleich zu einer Bestimmung der Drehlage anhand mehrerer Ultraschallsensoren weniger aufwendig und kostenintensiv.

Die Vorrichtung kann zusätzlich einen in Abhängigkeit von Steuerungssignalen der Regelungseinrichtung einen mittleren Abstand des Gestänges gegenüber dem Boden oder dem Bestand beeinflussenden Aktor beispielsweise in Form eines oder mehrerer Hydraulikzylinder umfassen, welcher Steuerungssignale in mechanische Bewegung oder eine andere physikalische Größe, wie beispielsweise Druck umsetzt, und damit eine das Gestänge anhebende oder absenkende Kraft auf das Gestänge ausübt. Grundsätzlich können anstelle der Hydraulikzylinder auch andere geeignete Aktoren eingesetzt werden, bspw. pneumatische, elektromechanische oder elektromotorische Aktoren.

Darüber hinaus kann die Vorrichtung mindestens eine Sensoranordnung zur Erfassung wenigstens eines mittleren Abstands des Gestänges gegenüber dem Boden oder dem Bestand umfassen. Vorzugsweise umfasst eine solche Sensoranordnung jeweils typischerweise wenigstens einen an jedem Ende der Ausleger des Gestänges angeordneten Abstandssensor. Mittels an den Enden der Ausleger des Gestänges angeordneter Abstandssensoren und eine entsprechende Berücksichtigung deren Ausgangssignale bei der Erzeugung von Steuerungssignalen vermittels der Regelungseinrichtung kann die Zuverlässigkeit gesteigert werden, mit der verhindert werden kann, dass das Gestänge oder hieran angeordnete Ausbringungsmittel für feste und/oder flüssige Wirkstoffe, wie beispielsweise Spritzdüsen, in Bodenkontakt und/oder in Kontakt mit dem Bestand kommen. Es sei darauf hingewiesen, dass die Sensoranordnung wahlweise auch nur einen einzigen Abstandssensor an einem Ende eines der Ausleger des Gestänges umfassen kann. Mittels eines solchen an einem Ende eines der Ausleger des Gestänges angeordnetem Abstandssensor und durch eine entsprechende Berücksichtigung seines Ausgangssignals bei der Erzeugung von Steuerungssignalen vermittels der Regelungseinrichtung kann die Zuverlässigkeit gesteigert werden, mit der verhindert werden kann, dass das Gestänge oder hieran angeordnete Ausbringungsmittel für feste und/oder flüssige Wirkstoffe, wie beispielsweise Spritzdüsen, in Bodenkontakt und/oder in Kontakt mit dem Bestand kommen.

Alternativ oder zusätzlich kann eine solche Sensoranordnung wenigstens einen am das Trägerfahrzeug in dessen Breite nicht überragenden Teil des Gestänges angeordneten Abstandssensor umfassen.

Anhand der Abstandssignale der Sensoren kann die Regelungseinrichtung zumindest für den mindestens einen einen mittleren Abstand des Gestänges gegenüber dem Boden oder dem Bestand beeinflussenden Aktor vorgesehene Steuerungssignale erzeugen.

Um Einflüsse ungleicher Masseverteilungen des Gestänges möglichst auszuschließen verläuft die Drehachse vorzugsweise durch den Schwerpunkt des Gestänges.

Das mindestens eine Gestänge kann dauerhaft oder gegen eine andere Einrichtung zur landwirtschaftlichen Boden- und/oder Bestandsbehandlung auswechselbar an dem Trägerfahrzeug angeordnet sein.

Das Trägerfahrzeug kann hierbei angetrieben oder gezogen sein, so dass die Vorrichtung:
- im Falle eines angetriebenen Trägerfahrzeugs mit dauerhaft angeordnetem Gestänge ein selbstfahrendes landwirtschaftliches Gerät beziehungsweise ein landwirtschaftliches Selbstfahrgerät bildet,
- im Falle eines gezogenen Trägerfahrzeugs mit dauerhaft angeordnetem Gestänge ein gezogenes landwirtschaftliches Gerät, wie beispielsweise einen landwirtschaftlichen Anhänger, bildet, und
- im Falle eines angetriebenen Trägerfahrzeugs mit gegen eine andere Einrichtung zur landwirtschaftlichen Boden- und/oder Bestandsbehandlung beispielsweise an einem Dreipunkt-Kraftheber oder auf einer hierfür vorgesehenen Ladefläche auswechselbar angeordnetem Gestänge entweder ein Anbaugerät, oder ein Aufbaugerät bildet.

Zusätzliche Vorteile zu den bereits genannten Vorteilen gegenüber dem Stand der Technik ergeben sich durch eine vollständige Lösung der gestellten Aufgabe unter Behebung sämtlicher Nachteile des Standes der Technik.

Zudem wird durch die exakte Einhaltung der Abstände der Ausleger gegenüber der Bodenoberfläche und/oder dem Bestand unabhängig von dem sich bewegenden und/oder wankenden Trägerfahrzeug zuverlässig vermieden, dass die Ausleger in Bodenkontakt kommen.

Ein zweiter Gegenstand der Erfindung betrifft ein Verfahren zur Steuerung einer zuvor beschriebenen Vorrichtung anhand einer Regelung der Drehlage des um eine Drehachse beweglich an einem Trägerfahrzeug angeordneten Gestänges der Vorrichtung in Abhängigkeit von einer momentanen Drehlage, wobei zur Bestimmung der momentanen Drehlage vorgesehen ist:
- eine Drehgeschwindigkeit des Gestänges um die Drehachse in Bezug auf eine Referenzebene zu erfassen,
- unabhängig von der Drehgeschwindigkeit eine Drehlage des Gestänges um die Drehachse in Bezug auf die Referenzebene zu erfassen,
- durch zeitliche Intergration der Drehgeschwindigkeit die Drehlage des Gestänges in Bezug auf die Referenzebene zu berechnen, wodurch einerseits weder das Trägerfahrzeug der Vorrichtung, noch translatorische Beschleunigungen die Berechnung der Drehlage störend beeinflussen, jedoch andererseits Messfehler ebenfalls integriert werden und eine nachfolgend als Winkeldrift bezeichnete Drift der Drehlage verursachen, und
- die anhand der Drehgeschwindigkeit berechnete Drehlage des Gestänges zur Kompensation der Winkeldrift mit der erfassten Drehlage des Gestänges zur Bestimmung der momentanen Drehlage des Gestänges in Bezug auf die Referenzebene zu fusionieren.

Durch eine Fusion der berechneten und der als erfasste Drehlage bezeichneten gemessenen Drehlage wird die momentane Drehlage in Bezug auf die Referenzebene sehr genau bestimmt, wobei nur die Vorteile der jeweiligen Messmethoden genutzt werden, ohne deren Nachteile in Kauf nehmen zu müssen.

Das Verfahren sieht bevorzugt vor, anhand der Fusion der vermittels der Drehgeschwindigkeit berechneten Drehlage des Gestänges mit der unabhängig von der Drehgeschwindigkeit erfassten Drehlage des Gestänges jeweils bezogen auf die Referenzebene ein das Gestänge aus dessen momentaner Drehlage in eine Soll-Drehlage in Bezug auf die Referenzebene rückführendes Steuerungssignal zu erzeugen.

Das Verfahren kann vorsehen, die Drehgeschwindigkeit anhand eines am Gestänge angeordneten, die Drehgeschwindigkeit des Gestänges erfassenden Drehratensensors zu erfassen.

Zur Erfassung der Drehgeschwindigkeit wird hierbei ein Drehratensensor eingesetzt, der direkt auf dem Gestänge montiert ist. Drehbewegungen des Trägerfahrzeuges haben somit keinen Einfluss auf die Bestimmung der Drehgeschwindigkeit des Gestänges. Ein der Messgröße proportionales oder diese wiederspiegelndes Ausgangssignal eines Drehratensensors entspricht somit der Drehbewegung des Gestänges bezogen auf eine beliebige Referenzebene, beispielsweise bezogen auf die Erdoberfläche bzw. orthogonal zur Erdbeschleunigung oder eine ein gemitteltes Bodenprofil wiederspiegelnde, langfristige Ausrichtung des Trägerfahrzeugs.

Diese Messgröße bzw. ein dieser Messgröße proportionales oder diese wiederspiegelndes, in das oder die Steuerungssignale einfließende Ausgangssignal eines Drehgeschwindigkeiten des Gestänges erfassenden Drehratensensors kann verwendet werden, um einen aktive Dämpfung des Gestänges in Form eines aktiv eingeleiteten Bremsmoments zu erhalten.

Das Verfahren kann alternativ oder zusätzlich vorsehen, die Drehgeschwindigkeit des Gestänges anhand einer Drehgeschwindigkeit des Trägerfahrzeugs um dessen parallel zur Drehachse verlaufende Längsachse einhergehend mit einer Relativdrehung zwischen Trägerfahrzeug und Gestänge zu erfassen, so dass aus den beiden Messwerten Drehgeschwindigkeit des Trägerfahrzeugs in Bezug auf dessen Längsachse sowie Relativdrehung zwischen Trägerfahrzeug und Gestänge dann die absolute Drehgeschwindigkeit des Gestänges um die Drehachse ermittelt werden kann.

Hierzu kann vorgesehen sein, am Trägerfahrzeug der Vorrichtung einen Drehratensensor anzuordnen, um die auch als Wankrate bezeichnete Drehgeschwindigkeit des Trägerfahrzeugs um dessen Längsachse zu erfassen, und einen Drehwinkelsensor oder Drehwinkelgeschwindkeitssensor zwischen Trägerfahrzeug und Gestänge vorzusehen.

Alternativ oder zusätzlich kann hierzu vorgesehen sein, eine Drehbeschleunigung zu erfassen und durch zeitliche Integration die Drehgeschwindigkeit zu gewinnen.

Alternativ oder zusätzlich kann vorgesehen sein, translatorische Beschleunigungen im Bereich der Ausleger des Gestänges, vorzugsweise an den gegenüberliegenden Enden der Ausleger, zu erfassen, und anhand einer Differenz der translatorischen Beschleunigungen an den gegenüberliegenden Enden der Ausleger zunächst die Drehbeschleunigung des Gestänges und durch zeitliche Integration wiederum die Drehgeschwindigkeit zu berechnen.

Das Verfahren kann zusätzlich oder anstelle der vorangehenden, eine Erfassung von Relativdrehung zwischen Trägerfahrzeug und Gestänge umfassender Ausführungsbeispiele vorsehen, Relativdrehung zwischen Trägerfahrzeug und Gestänge anhand der Differenz zwischen der Drehlage des Gestänges um die Drehachse in Bezug auf die Referenzebene und der Drehlage des Trägerfahrzeugs um dessen parallel zur Drehachse verlaufende Längsachse in Bezug auf die Referenzebene zu erfassen, wobei die Differenz des von den Sensoren erfassten Winkels zwischen dem Trägerfahrzeug und der Referenzebene und des Winkels zwischen dem Gestänge und der Referenzebene einer Relativdrehung zwischen Trägerfahrzeug und Gestänge proportional ist. Zur Erfassung der Drehlage des Gestänges um die Drehachse in Bezug auf die Referenzebene und der Drehlage des Trägerfahrzeugs um dessen parallel zur Drehachse verlaufende Längsachse in Bezug auf die Referenzebene können Neigungswinkel zwischen dem Gestänge und der Vertikalen und/oder der Horizontalen beziehungsweise zwischen dem Trägerfahrzeug und der Vertikalen und/oder der Horizontalen erfassende Neigungswinkelsensoren jeweils am Gestänge und am Trägerfahrzeug vorgesehen sein.

Das Verfahren kann vorsehen, anhand einer Fusionierung der vermittels einer erfassten Drehgeschwindigkeit berechneten Drehlage des Gestänges mit einer berechneten und/oder erfassten Relativdrehung zwischen Trägerfahrzeug und Gestänge Bezug zu nehmen auf eine einer langfristigen Ausrichtung des Trägerfahrzeugs entsprechende, ein gemitteltes Bodenprofil wiederspiegelnde, Referenzebene.

Zur Erfassung einer Drehlage des Gestänges um die Drehachse in Bezug auf die Referenzebene kann das Verfahren vorsehen, beispielsweise vermittels eines Neigungssensors einen einen Winkel zwischen dem Gestänge und der Referenzebene wiederspiegelnden Neigungswinkel zu erfassen.

Anhand einer Fusionierung der anhand einer Drehgeschwindigkeit berechneten Drehlage des Gestänges mit einer durch Erfassung eines Winkels zwischen dem Gestänge und der Referenzebene erfassten Drehlage des Gestänges kann Bezug genommen werden auf eine einem künstlichen Horizont entsprechende Referenzebene.

Das Verfahren kann vorsehen, zur Bestimmung der momentanen Drehlage des Gestänges um die Drehachse in Bezug auf die Referenzebene anhand einer Fusionierung der anhand einer Drehgeschwindigkeit berechneten Drehlage des Gestänges mit der direkt oder durch Differenzbildung indirekt erfassten Drehlage des Gestänges eine Kalman-Filterung auszuführen.

Alternativ oder zusätzlich kann das Verfahren vorsehen, zur Bestimmung der momentanen Drehlage des Gestänges um die Drehachse in Bezug auf die Referenzebene anhand einer Fusionierung der anhand einer Drehgeschwindigkeit berechneten Drehlage des Gestänges mit der direkt oder durch Differenzbildung indirekt erfassten Drehlage des Gestänges eine Tiefpassfilterung der erfassten Drehlage sowie einen Vergleich der tiefpassgefilterten erfassten Drehlage unter ständigem Abgleich auf Null mit der anhand einer Drehgeschwindigkeit berechneten Drehlage auszuführen, um die Winkeldrift zu kompensieren.

Das Verfahren erlaubt sämtliche Vorteile der beschriebenen Vorrichtung nutzbar zu machen.

Das Verfahren eignet sich neben einer Verwendung in Verbindung mit einer zuvor beschriebenen Vorrichtung zum Ausbringen von flüssigen und/oder festen Wirkstoffen zur Verwendung mit beliebigen Vorrichtungen zur landwirtschaftlichen Boden- und/oder Bestandsbehandlung, bei der - sei es zu Schonung des Bodens oder des Bestands - auf gegenüber dem Boden abgestützte Geräte verzichtet wird und dennoch eine hohe Genauigkeit einer Führung in einer vorgegebenen Drehlage, beispielsweise lotrecht oder parallel zum Boden erforderlich ist.

Sowohl die Vorrichtung, als auch das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Darüber hinaus kann die Vorrichtung alternativ oder zusätzlich einzelne oder eine Kombination mehrerer zuvor in Verbindung mit dem Verfahren beschriebene Merkmale aufweisen, ebenso wie das Verfahren alternativ oder zusätzlich einzelne oder eine Kombination mehrerer zuvor in Verbindung mit der Vorrichtung beschriebene Merkmale aufweisen kann.

Es ist ersichtlich, dass die Erfindung verwirklicht sein kann durch eine Spritzgestängeregelung mittels mindestens eines Inertialsensors, wie beispielsweise einem Drehratensensor, etwa einem Gyroskop, welcher an oder im Spritzgestänge und/oder einem Teil eines Spritzgestänges, beispielsweise einem Mittelteil vorgesehen ist. Der Inertialsensor erfasst eine effektive Drehgeschwindigkeit des Spritzgestänges und/oder eines Teils eines Spritzgestänges unabhängig von einer Bewegung des Trägerfahrzeugs. Aufgrund der erfassten Drehgeschwindigkeit erfolgt eine aktive Dämpfung und/oder Regelung. Vermittels eines zeitlichen Integrals über der Drehgeschwindigkeit kann ein als Drehlage in Bezug auf eine Referenzebene bezeichneter tatsächlicher Verdrehwinkel errechnet werden.

Vermittels eines Winkelsensors, beispielsweise einen Drehwinkelgeber, wird zusätzlich die Drehlage des Spritzgestänges und/oder eines Teils eines Spritzgestänges relativ zum Trägerfahrzeug erfasst, wodurch die absolute Drehwinkelposition des Spritzgestänges oder des Teils eines Spritzgestänges zum Trägerfahrzeug ermittelt wird.

Anhand einer Fusion der anhand der Ausgangssignale der Sensoren gewonnenen Sensordaten Drehgeschwindigkeit beziehungsweise Drehrate und absolute Drehwinkelposition beziehungsweise Drehlage und entsprechender Filterung, beispielsweise vermittels eines Kalmann-Filters, ist es möglich, das Spritzgestänge oder den mit einem Inertialsensor versehenen Teil eines Spritzgestänges mit dem Trägerfahrzeug zu führen, ohne dass hochfrequente Wankbewegungen die Lage und Ausrichtung des Spritzgestänges oder des Teils eines Spritzgestänges stören.

Alternativen zu einem Drehratensensor beispielsweise in Form eines Gyroskops können ein oder mehrere Drehbeschleunigungssensoren oder symmetrisch angeordnete Drehbeschleunigungssensoren, deren Ausgangssignale verrechnet werden, sein. Sind beispielsweise zwei symmetrisch angeordnete Drehbeschleunigungssensoren in unterschiedlichen Richtungen vorgesehen, so kann anhand der Drehbeschleunigen des einen und des anderen Drehbeschleunigungssensors jeweils die Drehbeschleunigung in einer Richtung erfasst und durch ein zeitliches Integral über der erfassten Drehbeschleunigung die Drehgeschwindigkeit in der entsprechenden Richtung errechnet werden.

Zusammengefasst sieht die Erfindung demnach vor, die aktuelle Lage des Gestänges auf eine Referenzebene zu beziehen, um die Drehlage des Gestänges beziehungsweise um das Gestänge auf einen definierten Winkel unabhängig von den Bewegungen des Trägerfahrzeuges regeln zu können. Diese Referenzebene kann eine orthogonal zur Erdbeschleunigung verlaufende horizontale Ebene sein, oder einer langfristigen Ausrichtung des Trägerfahrzeugs entsprechen.

Hierzu sieht die Erfindung eine Fusionierung zweier anhand voneinander unabhängiger Messmethoden gewonnener Messsignale, zum Einen einer berechneten Drehlage des Gestänges und zum Anderen einer gemessenen beziehungsweise erfassten Drehlage des Gestänges zu einem fusionierten Steuerungs- beziehungsweise Messsingal vor.

Das fusionierte Messsignal repräsentiert die momentane Drehlage des Gestänges bezogen auf eine Referenzebene, entsprechend einem Drehwinkel zwischen dem Gestänge und der Referenzebene. Die Referenzebene entspricht hierbei vorzugsweise einen künstlichen Horizont oder einer langfristige Ausrichtung des Trägerfahrzeugs. Das Ergebnis ist unempfindlich gegenüber rotatorischen und translatorischen Bewegungen des Trägerfahrzeugs und unterliegt keiner Winkeldrift. Darüber hinaus ist dieses fusionierte Messsignal auch nicht zeitlich nacheilend zur tatsächlichen Drehbewegung und somit hervorragend für eine Regelung geeignet, welche nicht unerwünscht mit dem Trägerfahrzeug gekoppelt, insbesondere hochfrequent gekoppelt ist.

Wichtig ist hervorzuheben, dass die um mindestens eine vorzugsweise parallel zur Längsachse des Trägerfahrzeugs verlaufende schwenkbare Anordnung des Gestänges am Trägerfahrzeug sowohl eine um mindestens eine vorzugsweise parallel zur Längsachse des Trägerfahrzeugs verlaufende schwenkbare Anordnung eines in sich starren oder gelenkigen Gestänges umfasst, als auch eine um mindestens eine vorzugsweise parallel zur Längsachse des Trägerfahrzeugs verlaufende schwenkbare Anordnung zweier um jeweils eigene, vorzugsweise parallel zur Längsachse des Trägerfahrzeugs verlaufende Drehachsen schwenkbar am Trägerfahrzeug oder an einem Gestängemittelteil angeordneter Ausleger eines Gestänges umfasst.

Die Erfindung und deren Vorteile werden im Nachfolgenden anhand von in den Figuren dargestellter Ausführungsbeispiele näher erläutert. Die Größenverhältnisse der einzelnen Elemente zueinander entsprechen in den Figuren nicht immer den realen Größenverhältnissen, da in den Figuren einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verteilergetriebe ausgestaltet sein kann und stellen keine abschließende Begrenzung dar. Es zeigen in schematischer Darstellung:
- Fig. 1: eine perspektivische Ansicht einer als selbstfahrende Feldspritze ausgeführten Vorrichtung zum Ausbringen von flüssigen und/oder festen Wirkstoffen.
- Fig. 2: eine isometrische Ansicht eines Gestänges einer Vorrichtung zum Ausbringen von flüssigen und/oder festen Wirkstoffen.
- Fig. 3: eine perspektivische Detailansicht einer um eine vorzugsweise parallel zu einer Längsachse des Trägerfahrzeugs verlaufende Drehachse schwenkbaren Anordnung eines Gestänges einer Vorrichtung zum Ausbringen von flüssigen und/oder festen Wirkstoffen.
- Fig. 4: eine Vorderansicht eines Gestänges einer Vorrichtung zum Ausbringen von flüssigen und/oder festen Wirkstoffen.
- Fig. 5: eine Detailansicht einer um eine vorzugsweise parallel zu einer Längsachse des Trägerfahrzeugs verlaufende Drehachse schwenkbaren Anordnung eines Gestänges einer Vorrichtung zum Ausbringen von flüssigen und/oder festen Wirkstoffen in einer Vorderansicht.
- Fig. 6: eine Detailansicht eines eine um eine vorzugsweise parallel zu einer Längsachse des Trägerfahrzeugs verlaufende Drehachse schwenkbare Anordnung eines Gestänges einer Vorrichtung zum Ausbringen von flüssigen und/oder festen Wirkstoffen darstellenden Teils einer Vorrichtung zum Ausbringen von flüssigen und/oder festen Wirkstoffen in perspektivischer Ansicht.
- Fig. 7: ein erstes Ausführungsbeispiel eines Ablaufs einer Bestimmung einer momentanen Drehlage des Gestänges in Bezug auf eine Referenzebene gemäß eines Verfahrens zur Steuerung einer Vorrichtung zum Ausbringen von flüssigen und/oder festen Wirkstoffen anhand einer Regelung der Drehlage des um eine Drehachse beweglich an einem Trägerfahrzeug angeordneten Gestänges der Vorrichtung in Abhängigkeit von einer momentanen Drehlage.
- Fig. 8: ein zweites Ausführungsbeispiel eines Ablaufs einer Bestimmung einer momentanen Drehlage des Gestänges in Bezug auf eine Referenzebene gemäß eines Verfahrens zur Steuerung einer Vorrichtung zum Ausbringen von flüssigen und/oder festen Wirkstoffen anhand einer Regelung der Drehlage des um eine Drehachse beweglich an einem Trägerfahrzeug angeordneten Gestänges der Vorrichtung in Abhängigkeit von einer momentanen Drehlage.

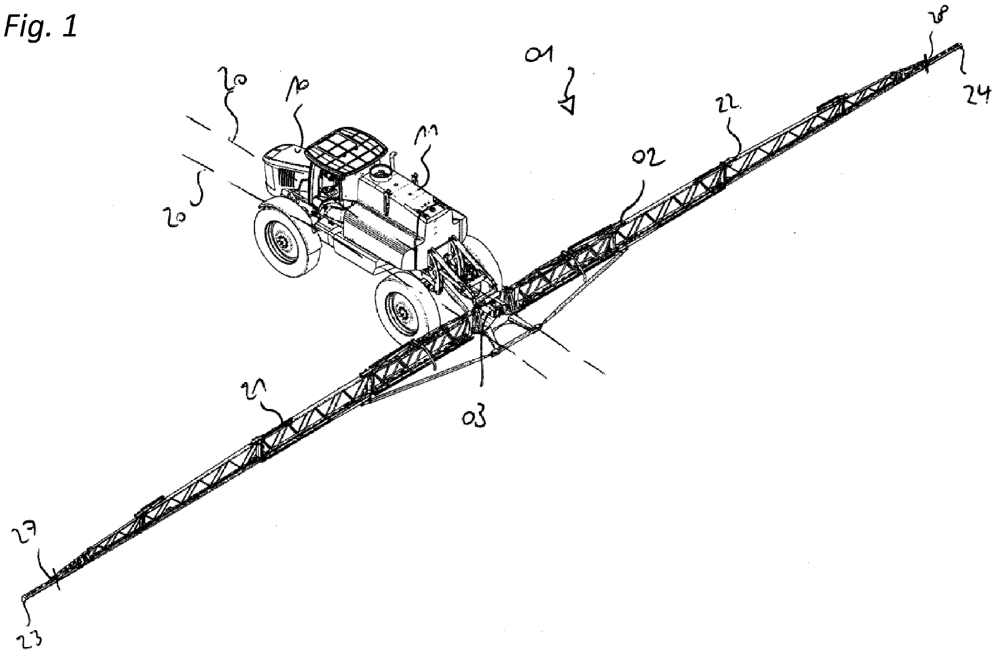

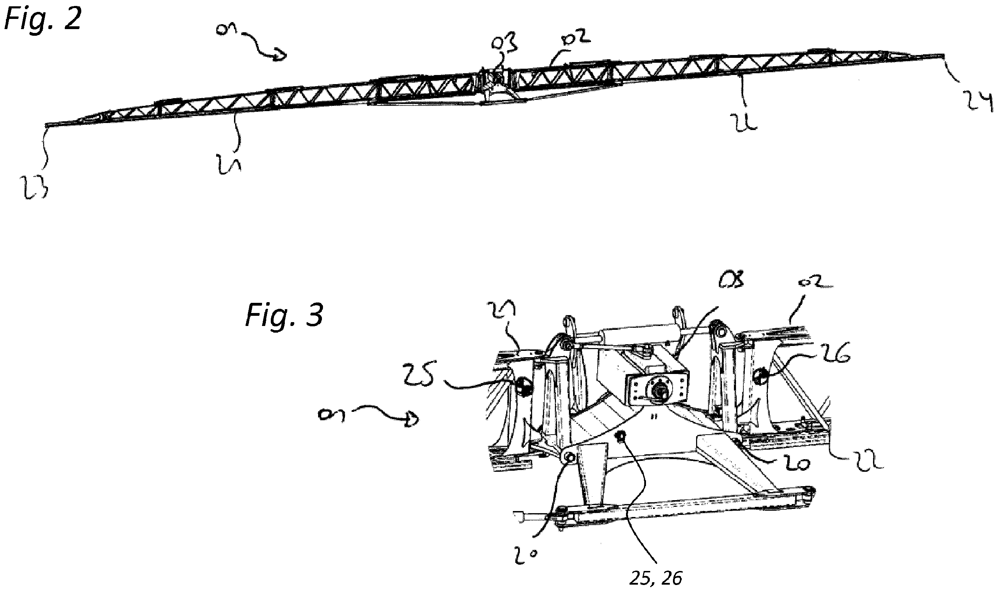

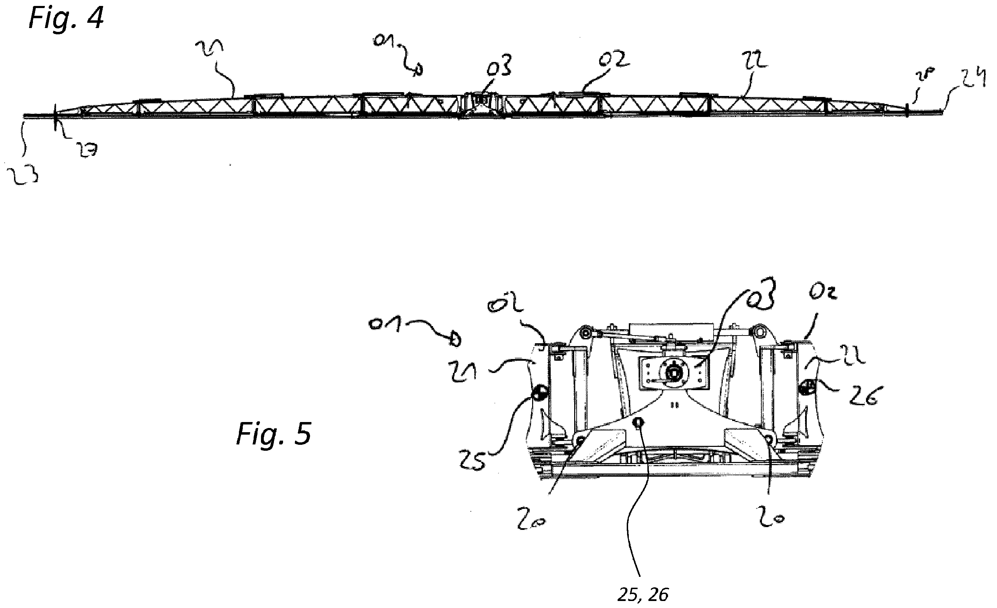

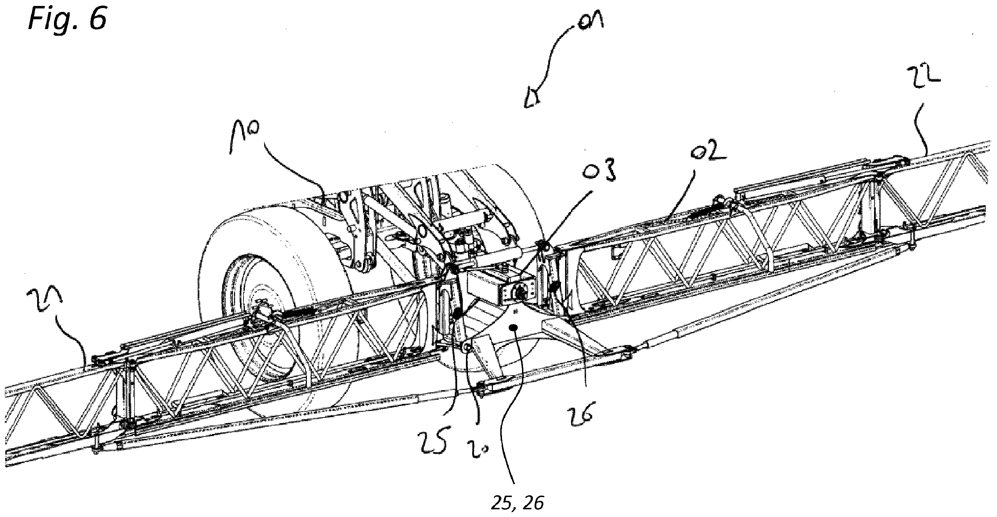

Eine in Fig. 1, Fig. 2, Fig. 3, Fig. 4, Fig. 5, Fig. 6 ganz oder in Teilen dargestellte Vorrichtung 01 zum Ausbringen von flüssigen und/oder festen Wirkstoffen umfasst:
- ein Trägerfahrzeug 10,
- mindestens ein zumindest um eine vorzugsweise parallel zu einer Längsachse des Trägerfahrzeugs 10 verlaufende Drehachse 20 schwenkbar angeordnetes Gestänge 02, wie beispielsweise ein Spritzgestänge, mit beidseits des Trägerfahrzeugs 10 abstehenden Auslegern 21, 22 sowie an diesem angeordneten, mit einem Speicher 11 für mindestens einen flüssigen und/oder festen Wirkstoff verbundenen und/oder verbindbaren Ausbringungsmitteln, wie beispielsweise mit einem Spritzmitteltank verbundenen und/oder verbindbaren Spritzdüsen,
- mindestens eine Sensoranordnung zur Erfassung einer Drehgeschwindigkeit des Gestänges oder von Teilen des Gestänges 02, wie beispielsweise dessen Ausleger 21, 22 um die mindestens eine Drehachse 20 in Bezug auf eine Referenzebene,
- mindestens eine Sensoranordnung zur Erfassung einer Drehlage des Gestänges 02 um die Drehachse 20 in Bezug auf die Referenzebene,
- eine Ausgangssignale der Sensoranordnungen zu Steuerungssignalen verarbeitende Regelungseinrichtung,
- zumindest einen in Abhängigkeit von Steuerungssignalen der Regelungseinrichtung die Drehlage des Gestänges 02 um die Drehachse in Bezug auf das Trägerfahrzeug 10 beeinflussenden, auch als Aktuator bezeichneten Aktor 03 beispielsweise in Form eines oder mehrerer Hydraulikzylinder, welcher Steuerungssignale in mechanische Bewegung oder eine andere physikalische Größe, wie beispielsweise Druck umsetzt und damit eine ein Drehmoment auf das Gestänge 02 ausübende Kraft oder ein ein Drehmoment auf das Gestänge 02 ausübendes Kräftepaar erzeugt,
wobei die Regelungseinrichtung zur Bestimmung einer Drehlage des Gestänges 02 um die Drehachse 20 in Bezug auf eine beispielsweise mit der Referenzebene übereinstimmende Anfangsausrichtung:
- durch zeitliche Intergration der Drehgeschwindigkeit w die Drehlage alpha2 des Gestänges 02 in Bezug auf die Referenzebene berechnet, wodurch einerseits weder das Trägerfahrzeug 10, noch translatorische Beschleunigungen die Berechnung der Drehlage störend beeinflussen, jedoch andererseits Messfehler ebenfalls integriert werden und eine als Winkeldrift bezeichnete Drift der Drehlage verursachen, und
- die anhand der Drehgeschwindigkeit w berechnete Drehlage alpha 2 des Gestänges 02 zur Kompensation der Winkeldrift mit der erfassten Drehlage alpha1 beziehungsweise d_alpha1 des Gestänges 02 zur Bestimmung der momentanen Drehlage des Gestänges 02 in Bezug auf die Referenzebene fusioniert, um hieraus ein das Gestänge 02 aus dessen momentaner Drehlage in eine Soll-Drehlage in Bezug auf die Referenzebene rückführendes Steuerungssignal zu erzeugen.

Die mindestens eine Sensoranordnung zur Erfassung einer Drehgeschwindigkeit w des Gestänges 02 oder von Teilen des Gestänges 02, wie beispielsweise dessen Ausleger 21, 22 in Bezug auf eine Referenzebene kann einen oder mehrere am Gestänge 02 angeordnete, die Drehgeschwindigkeit w des Gestänges 02 oder von Teilen des Gestänges 02, wie beispielsweise dessen Ausleger 21, 22, um die zumindest eine Drehachse 20 erfassenden Drehratensensor 25, 26 umfassen.

Zur Erfassung der Drehgeschwindigkeit wird hierbei vorzugsweise mindestens ein Drehratensensor 25, 26 eingesetzt, der direkt auf dem Gestänge 02, bspw. an dessen Mittelteil, oder auf einem um eine eigene Drehachse 20 schwenkbar angeordneten Teil des Gestänges 02, wie beispielsweise einem um eine eigene Drehachse 20 schwenkbar angeordneten Ausleger 21, 22 des Gestänges 02 montiert ist. Drehbewegungen des Trägerfahrzeuges 10 haben somit keinen Einfluss auf die Bestimmung der Drehgeschwindigkeit des Gestänges 02 oder der Drehgeschwindigkeiten von Teilen des Gestänges 02. Ein der Messgröße proportionales oder diese wiederspiegelndes Ausgangssignal eines Drehratensensors 25, 26 entspricht somit der Drehbewegung des Gestänges 02 oder eines beispielsweise durch einen Ausleger 21, 22 gebildeten Teils des Gestänges 02 bezogen auf eine beliebige Referenzebene, beispielsweise bezogen auf die Erdoberfläche bzw. orthogonal zur Erdbeschleunigung oder eine ein gemitteltes Bodenprofil wiederspiegelnde, langfristige Ausrichtung des Trägerfahrzeugs 10.

Diese Messgröße bzw. ein dieser Messgröße proportionales oder diese wiederspiegelndes, in die Steuerungssignale an den oder die Aktoren 03 einfließende Eingangsgröße der Regelungseinrichtung dienendes Ausgangssignal eines Drehgeschwindigkeiten des Gestänges 02 oder von durch die Ausleger 21, 22 gebildete Teile des Gestänges 02 erfassenden Drehratensensors 25, 26 kann verwendet werden, um einen aktive Dämpfung des Gestänges 02 in Form eines aktiv eingeleiteten Bremsmoments zu erhalten.

Die mindestens eine Sensoranordnung zur Erfassung einer Drehgeschwindigkeit des Gestänges 02 oder von Teilen des Gestänges 02, wie beispielsweise dessen Ausleger 21, 22, um zumindest eine Drehachse 20 in Bezug auf eine Referenzebene kann mindestens zwei im Bereich der Ausleger 21, 22 des Gestänges 20, beispielsweise an deren Enden 23, 24, angeordnete Beschleunigungssensoren 27, 28 umfassen. Deren Ausgangssignale wiederspiegeln die translatorischen Beschleunigungen an den Enden 23, 24 der Ausleger 21, 22. Die Differenz der Ausgangssignale zweier an den gegenüberliegenden Enden 23, 24 der Ausleger 21, 22 angeordneter Beschleunigungssensoren 27, 28 multipliziert mit der Arbeits- und/oder Gestängebreite beziehungsweise mit dem Abstand zwischen den beiden Beschleunigungssensoren 27, 28 ergibt die Drehbeschleunigungen, durch deren zeitliche Integration wiederum die Drehgeschwindigkeit erhalten wird.

Die mindestens eine Sensoranordnung zur Erfassung einer Drehgeschwindigkeit des Gestänges 02 oder von Teilen des Gestänges 02, wie beispielsweise dessen Ausleger 21, 22 um zumindest eine Drehachse 20 in Bezug auf eine Referenzebene kann alternativ mindestens einen am Trägerfahrzeug 10 angeordneten, auch als Drehwinkelgeschwindkeitssensors bezeichneten Drehratensensor umfassen, um Drehgeschwindigkeiten des Trägerfahrzeugs 10 wenigstens um dessen parallel zur mindestens einen Drehachse 20 verlaufenden Längsachse und damit Störbewegungen darstellende Drehbewegungen des Trägerfahrzeugs 10 zu messen. Hierbei umfasst die mindestens eine Sensoranordnung zur Erfassung einer Drehgeschwindigkeit des Gestänges 02 um die Drehachse in Bezug auf eine Referenzebene vorzugsweise zusätzlich mindestens einen eine Relativdrehung zwischen Trägerfahrzeug 10 und Gestänge 02 oder zwischen Trägerfahrzeug 10 und beispielsweise durch die Ausleger 21, 22 gebildeten Teilen des Gestänges 02 erfassenden Drehwinkelsensor oder Drehwinkelgeschwindkeitssensor, so dass aus den beiden Messwerten Drehgeschwindigkeit des Trägerfahrzeugs 10 in Bezug auf dessen Längsachse sowie Relativdrehung zwischen Trägerfahrzeug 10 und Gestänge 02 oder zwischen Trägerfahrzeug 10 und beispielsweise durch die Ausleger 21, 22 gebildeten Teilen des Gestänges 02 die absolute Drehgeschwindigkeit des Gestänges 02 oder von beispielsweise durch die Ausleger 21, 22 gebildeten Teilen des Gestänges 02 um die jeweilige mindestens eine Drehachse 20 ermittelt werden kann. Anhand eines Drehwinkelsensors wird hierbei die Relativdrehung zwischen Trägerfahrzeug 10 und Gestänge 02 beziehungsweise von um jeweils eingene Drehachsen schwenkbar am Trägerfahrzeug 10 angeordneten, beispielsweise durch Ausleger 21, 22 gebildeten Teilen des Gestänges 02 direkt erfasst, wohingegen anhand eines Drehwinkelgeschwindkeitssensors die Relativdrehung zwischen Trägerfahrzeug 10 und Gestänge 02 beziehungsweise von um jeweils eingene Drehachsen schwenkbar am Trägerfahrzeug 10 angeordneten, beispielsweise durch Ausleger 21, 22 gebildeten Teilen des Gestänges 02 durch zeitliche Integration der Drehgeschwindigkeit indirekt erfasst wird.

Die mindestens eine Sensoranordnung zur Erfassung einer Drehgeschwindigkeit des Gestänges 02 oder von Teilen des Gestänges 02, wie beispielsweise dessen Ausleger 21, 22, um wenigstens eine Drehachse in Bezug auf eine Referenzebene anstelle oder zusätzlich zu einem Drehratensensor einen Drehbeschleunigungssensor umfasst. Durch zeitliche Integration dessen Ausgangssignals kann ein Maß für die Drehgeschwindigkeit gewonnen werden.

Die mindestens eine Sensoranordnung zur Erfassung einer Drehlage des Gestänges 02 oder von Teilen des Gestänges 02, wie beispielsweise dessen Ausleger 21, 22, um die wenigstens eine Drehachse 20 in Bezug auf die Referenzebene können mindestens einen eine Relativdrehung zwischen Trägerfahrzeug 10 und Gestänge 02 oder zwischen Trägerfahrzeug 10 und Teilen des Gestänges 02, wie beispielsweise dessen Ausleger 21, 22 bezogen auf die zumindest eine Drehachse 20 erfassenden Sensor umfassen.

Der wenigstens eine Sensor zur Erfassung einer Relativdrehung zwischen Trägerfahrzeug 10 und Gestänge 02 oder zwischen Trägerfahrzeug 10 und Teilen des Gestänges 02, wie beispielsweise dessen Ausleger 21, 22 kann:
- wenigstens einen zwischen dem Gestänge 02 oder Teilen des Gestänges 02, wie beispielsweise dessen Ausleger 21, 22, und dem Trägerfahrzeug 10 angeordneten Drehwinkelsensor und/oder
- wenigstens einen einen Winkel zwischen dem Trägerfahrzeug 10 und der Referenzebene erfassenden Neigungssensor und zumindest einen einen Winkel zwischen dem Gestänge 02 oder von Teilen des Gestänges 02, wie beispielsweise dessen Ausleger 21, 22, und der Referenzebene erfassenden Neigungssensor umfassen.

Die Differenz des von den Neigungssensoren erfassten Winkels zwischen dem Trägerfahrzeug 10 und der Referenzebene und des Winkels zwischen dem Gestänge 02 oder Teilen des Gestänges 02, wie beispielsweise dessen Ausleger 21, 22, und der Referenzebene ist hierbei einer Relativdrehung zwischen Trägerfahrzeug 10 und Gestänge 02 beziehungsweise einer Relativdrehung zwischen Trägerfahrzeug 10 und um eigene Drehachsen 20 schwenkbar angeordneten Teilen des Gestänges 02, wie beispielsweise dessen Ausleger 21, 22 proportional.

Anhand einer Fusion der vermittels einer sensorisch erfassten Drehgeschwindigkeit w berechneten Drehlage alpha 2 des Gestänges 02 oder von um eigene Drehachsen 20 schwenkbar angeordneten Teilen des Gestänges 02, wie beispielsweise dessen Ausleger 21, 22 mit einer vermittels eines Drehwinkelsensors direkt oder durch Differenzbildung der Neigung alpha_g des Gestänges 02 oder um eigene Drehachsen 20 schwenkbar angeordneten Teilen des Gestänges 02, wie beispielsweise dessen Ausleger 21, 22, und der Neigung alpha_t des Trägerfahrzeugs 10 gegenüber der Referenzebene indirekt sensorisch erfassten Relativdrehung d_alpha1 zwischen Trägerfahrzeug 10 und Gestänge 02 beziehungsweise zwischen Trägerfahrzeug 10 und um eigene Drehachsen 20 schwenkbar angeordneten Teilen des Gestänges 02, wie beispielsweise dessen Ausleger 21, 22, kann Bezug genommen werden auf eine einer langfristigen Ausrichtung des Trägerfahrzeugs 10 entsprechende, ein gemitteltes Bodenprofil wiederspiegelnde, Referenzebene.

Die mindestens eine Sensoranordnung zur Erfassung einer Drehlage des Gestänges 02 oder von um eigene Drehachsen 20 schwenkbar angeordneten Teilen des Gestänges 02, wie beispielsweise dessen Ausleger 21, 22, um die Drehachse 20 in Bezug auf die Referenzebene können zumindest einen einen Winkel alpha_g zwischen dem Gestänge 02 oder um eigene Drehachsen 20 schwenkbar angeordneten Teilen des Gestänges 02, wie beispielsweise dessen Ausleger 21, 22, und der Referenzebene erfassenden Neigungssensor umfassen.

Anhand einer Fusionierung der vermittels einer Drehgeschwindigkeit w berechneten Drehlage alpha2 des Gestänges 02 oder von um eigene Drehachsen 20 schwenkbar angeordneten Teilen des Gestänges 02, wie beispielsweise dessen Ausleger 21, 22, mit einer anhand einer Erfassung eines Winkels alpha zwischen dem Gestänge 02 und der Referenzebene oder zwischen um eigene Drehachsen 20 schwenkbar angeordneten Teilen des Gestänges 02, wie beispielsweise dessen Ausleger 21, 22, und der Referenzebene erfassten Drehlage alpha1 des Gestänges 02 oder von um eigene Drehachsen 20 schwenkbar angeordneten Teilen des Gestänges 02, wie beispielsweise dessen Ausleger 21, 22, kann Bezug genommen werden auf eine einem künstlichen Horizont entsprechende Referenzebene.

Die Regelungseinrichtung kann zur Bestimmung der momentanen Drehlage des Gestänges 02 oder von um eigene Drehachsen 20 schwenkbar angeordneten Teilen des Gestänges 02, wie beispielsweise dessen Ausleger 21, 22, um die wenigstens eine Drehachse 20 in Bezug auf die Referenzebene anhand einer Fusionierung der anhand einer Drehgeschwindigkeit berechneten Drehlage des Gestänges 02 oder von um eigene Drehachsen 20 schwenkbar angeordneten Teilen des Gestänges 02, wie beispielsweise dessen Ausleger 21, 22, mit der direkt oder durch Differenzbildung indirekt sensorisch erfassten Drehlage des Gestänges 02 oder von um eigene Drehachsen 20 schwenkbar angeordneten Teilen des Gestänges 02, wie beispielsweise dessen Ausleger 21, 22:
- eine Kalman-Filterung ausführende Mittel umfassen, und/oder
- Mittel zur Tiefpassfilterung der sensorisch erfassten Drehlage sowie Mittel zum Vergleich der tiefpassgefilterten sensorisch erfassten Drehlage unter ständigem Abgleich auf Null mit der anhand einer Drehgeschwindigkeit berechneten Drehlage umfassen, um die Winkeldrift zu kompensieren.

Die Regelungseinrichtung regelt und/oder steuert mittels mindestens eines beispielsweise wenigstens einen Hydraulikzylinder umfassenden Aktors 03 die Drehlage des Gestänges 02 oder von um eigene Drehachsen 20 schwenkbar angeordneten Teilen des Gestänges 02, wie beispielsweise dessen Ausleger 21, 22, um die wenigstens eine Drehachse 20 längs zur Fahrtrichtung des Trägerfahrzeugs 10. Grundsätzlich können anstelle der Hydraulikzylinder jederzeit auch andere geeignete Aktoren 03 eingesetzt werden, bspw. pneumatische, elektromechanische oder elektromotorische Aktoren 03 oder Stellglieder.

Die Regelungseinrichtung erlaubt einen automatischen Betriebszustand, bei dem der Aktor 03 eine aktive Bewegung durchführt um somit die Drehlage des Gestänges 02 oder von um eigene Drehachsen 20 schwenkbar angeordneten Teilen des Gestänges 02, wie beispielsweise dessen Ausleger 21, 22, in Bezug auf die Referenzebene anzupassen.

Die Erfindung erlaubt eine sehr exakte Bestimmung einer momentanen Drehlage des Gestänges 02 oder von um eigene Drehachsen 20 schwenkbar angeordneten Teilen des Gestänges 02, wie beispielsweise dessen Ausleger 21, 22, bezogen auf eine Referenzebene. Dies ist im Vergleich zu einer Bestimmung der Drehlage anhand mehrerer Ultraschallsensoren weniger aufwendig und kostenintensiv.

Das mindestens eine Gestänge 02 kann dauerhaft oder gegen eine andere Einrichtung zur landwirtschaftlichen Boden- und/oder Bestandsbehandlung auswechselbar an dem Trägerfahrzeug 10 angeordnet sein.

Das Trägerfahrzeug 10 kann hierbei angetrieben oder gezogen sein, so dass die Vorrichtung 01:
- im Falle eines angetriebenen Trägerfahrzeugs 10 mit dauerhaft angeordnetem Gestänge 02 ein selbstfahrendes landwirtschaftliches Gerät beziehungsweise ein landwirtschaftliches Selbstfahrgerät bildet,
- im Falle eines gezogenen Trägerfahrzeugs 10 mit dauerhaft angeordnetem Gestänge 02 ein gezogenes landwirtschaftliches Gerät, wie beispielsweise einen landwirtschaftlichen Anhänger, bildet, und
- im Falle eines angetriebenen Trägerfahrzeugs 10 mit gegen eine andere Einrichtung zur landwirtschaftlichen Boden- und/oder Bestandsbehandlung beispielsweise an einem Dreipunkt-Kraftheber oder auf einer hierfür vorgesehenen Ladefläche auswechselbar angeordnetem Gestänge 02 entweder ein Anbaugerät, oder ein Aufbaugerät bildet.

Die Vorrichtung 01 erlaubt ein Verfahren zu deren Steuerung anhand einer Regelung der Drehlage des um eine Drehachse 20 beweglich an einem Trägerfahrzeug 10 angeordneten Gestänges 02 oder von um eigene Drehachsen 20 schwenkbar angeordneten Teilen des Gestänges 02, wie beispielsweise dessen Ausleger 21, 22, in Abhängigkeit von einer momentanen Drehlage auszuführen.

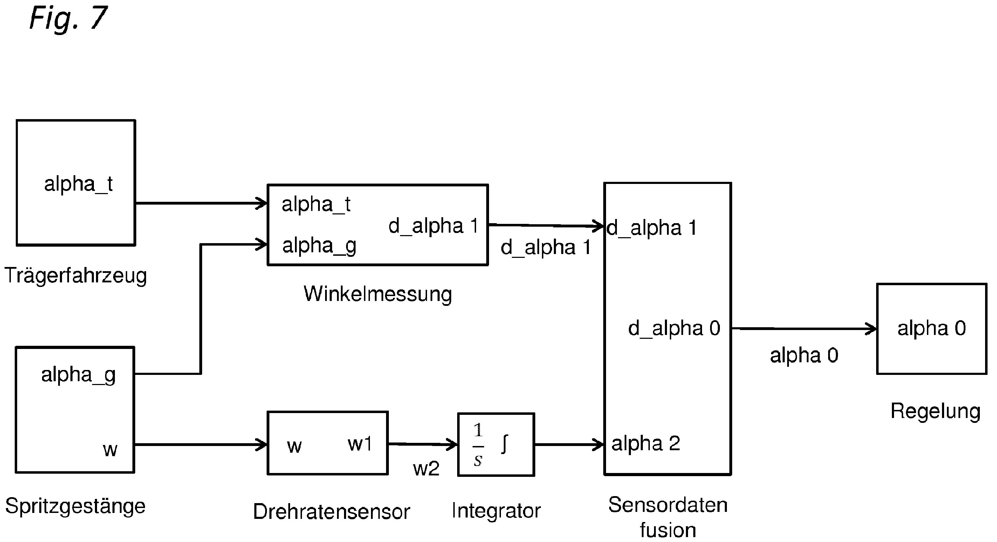

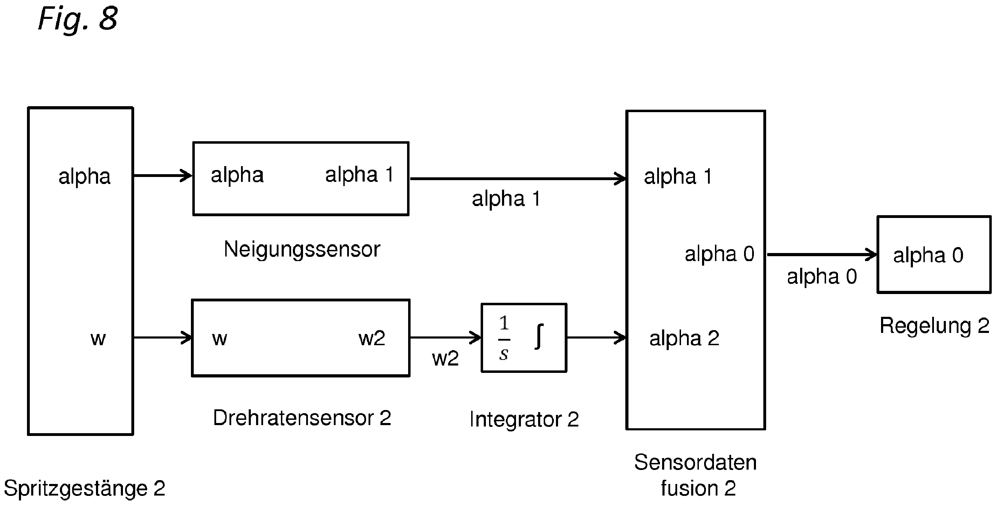

Zur in unterschiedlichen Ausführungsbeispielen in Fig. 7 und in Fig. 8 dargestellten Bestimmung der momentanen Drehlage ist dabei vorgesehen:
- eine Drehgeschwindigkeit w des Gestänges 02 oder von um eigene Drehachsen 20 schwenkbar angeordneten Teilen des Gestänges 02, wie beispielsweise dessen Ausleger 21, 22, um die mindestens eine Drehachse 20 in Bezug auf eine Referenzebene zu erfassen,
- bevorzugt unabhängig von der Drehgeschwindigkeit w eine Drehlage alpha1 beziehungsweise d_alpha1 des Gestänges 02 oder von um eigene Drehachsen 20 schwenkbar angeordneten Teilen des Gestänges 02, wie beispielsweise dessen Ausleger 21, 22, um die mindestens eine Drehachse 20 in Bezug auf die Referenzebene zu erfassen,
- durch zeitliche Intergration der erfassten Drehgeschwindigkeit w die Drehlage alpha2 des Gestänges 02 oder von um eigene Drehachsen 20 schwenkbar angeordneten Teilen des Gestänges 02, wie beispielsweise dessen Ausleger 21, 22, in Bezug auf die Referenzebene zu berechnen, wodurch einerseits weder das Trägerfahrzeug 10 der Vorrichtung 01, noch translatorische Beschleunigungen die Berechnung der Drehlage störend beeinflussen, jedoch andererseits Messfehler ebenfalls integriert werden und eine nachfolgend als Winkeldrift bezeichnete Drift der Drehlage alpha1 beziehungsweise d_alpha1 verursachen, und
- die anhand der Drehgeschwindigkeit w berechnete Drehlage alpha2 des Gestänges zur Kompensation der Winkeldrift mit der erfassten Drehlage alpha1 beziehungsweise d_alpha1 des Gestänges 02 oder von um eigene Drehachsen 20 schwenkbar angeordneten Teilen des Gestänges 02, wie beispielsweise dessen Ausleger 21, 22, zur Bestimmung der momentanen Drehlage alpha0 des Gestänges 02 oder von um eigene Drehachsen 20 schwenkbar angeordneten Teilen des Gestänges 02, wie beispielsweise dessen Ausleger 21, 22, in Bezug auf die Referenzebene zu fusionieren.

Durch eine Fusion der berechneten Drehlage alpha2 mit der als erfasste Drehlage bezeichneten gemessenen Drehlage alpha1 beziehungsweise d_alpha1 wird die momentane Drehlage in Bezug auf die Referenzebene sehr genau bestimmt, wobei nur die Vorteile der jeweiligen Messmethoden genutzt werden, ohne deren Nachteile in Kauf nehmen zu müssen.

Anhand der Fusion der vermittels der Drehgeschwindigkeit w berechneten Drehlage alpha2 des Gestänges 02 oder von um eigene Drehachsen 20 schwenkbar angeordneten Teilen des Gestänges 02, wie beispielsweise dessen Ausleger 21, 22, mit der unabhängig von der Drehgeschwindigkeit w erfassten Drehlage alpha1 beziehungsweise d_alpha1 des Gestänges 02 oder von um eigene Drehachsen 20 schwenkbar angeordneten Teilen des Gestänges 02, wie beispielsweise dessen Ausleger 21, 22, jeweils bezogen auf die Referenzebene kann ein das Gestänge 02 oder um eigene Drehachsen 20 schwenkbar angeordnete Teile des Gestänges 02, wie beispielsweise dessen Ausleger 21, 22, aus dessen beziehungsweise deren momentaner Drehlage alpha0 in eine Soll-Drehlage in Bezug auf die Referenzebene rückführendes Steuerungssignal erzeugt werden.

Gemäß der Erfindung kann die Drehgeschwindigkeit w auf mehrere Arten und Weisen erfasst werden.

Beispielsweise kann die Drehgeschwindigkeit w anhand mindestens eines am Gestänge 02 oder an um eigene Drehachsen 20 schwenkbar angeordneten Teilen des Gestänges 02, wie beispielsweise dessen Ausleger 21, 22, angeordneten, die Drehgeschwindigkeit des Gestänges 02 oder von um eigene Drehachsen 20 schwenkbar angeordneten Teilen des Gestänges 02, wie beispielsweise dessen Ausleger 21, 22, erfassenden Drehratensensors 25, 26 erfasst werden.

Zur Erfassung der Drehgeschwindigkeit w kann demnach ein Drehratensensor 25, 26 eingesetzt werden, der direkt auf dem Gestänge 02 oder auf um eigene Drehachsen 20 schwenkbar angeordneten Teilen des Gestänges 02, wie beispielsweise dessen Ausleger 21, 22, montiert ist. Drehbewegungen des Trägerfahrzeuges 10 haben somit keinen Einfluss auf die Bestimmung der Drehgeschwindigkeit w des Gestänges 02 oder von um eigene Drehachsen 20 schwenkbar angeordneten Teilen des Gestänges 02, wie beispielsweise dessen Ausleger 21, 22. Ein der Messgröße proportionales oder diese wiederspiegelndes Ausgangssignal eines Drehratensensors 25, 26 entspricht somit der Drehbewegung des Gestänges 02 oder von um eigene Drehachsen 20 schwenkbar angeordneten Teilen des Gestänges 02, wie beispielsweise dessen Ausleger 21, 22, bezogen auf eine beliebige Referenzebene, beispielsweise bezogen auf die Erdoberfläche bzw. orthogonal zur Erdbeschleunigung oder eine ein gemitteltes Bodenprofil wiederspiegelnde, langfristige Ausrichtung des Trägerfahrzeugs 10.

Diese Messgröße bzw. ein dieser Messgröße proportionales oder diese wiederspiegelndes, in das oder die Steuerungssignale einfließende Ausgangssignal mindestens eines Drehgeschwindigkeiten des Gestänges 02 oder von um eigene Drehachsen 20 schwenkbar angeordneten Teilen des Gestänges 02, wie beispielsweise dessen Ausleger 21, 22, erfassenden Drehratensensors 25, 26 kann verwendet werden, um einen aktive Dämpfung des Gestänges 02 oder von um eigene Drehachsen 20 schwenkbar angeordneten Teilen des Gestänges 02, wie beispielsweise dessen Ausleger 21, 22, in Form eines aktiv eingeleiteten Bremsmoments zu erhalten.

Die Drehgeschwindigkeit w kann alternativ oder zusätzlich anhand einer Drehgeschwindigkeit des Trägerfahrzeugs 10 um dessen parallel zur Drehachse 20 verlaufende Längsachse und anhand einer Relativdrehung zwischen Trägerfahrzeug 10 und Gestänge 02 oder zwischen Trägerfahrzeug 10 und um eigene Drehachsen 20 schwenkbar angeordneten Teilen des Gestänges 02, wie beispielsweise dessen Ausleger 21, 22, erfasst werden, so dass aus den beiden Messwerten Drehgeschwindigkeit des Trägerfahrzeugs 10 in Bezug auf dessen Längsachse sowie Relativdrehung zwischen Trägerfahrzeug 10 und Gestänge 02 beziehungsweise Relativdrehung zwischen Trägerfahrzeug 10 und um eigene Drehachsen 20 schwenkbar angeordneten Teilen des Gestänges 02, wie beispielsweise dessen Ausleger 21, 22, dann die absolute Drehgeschwindigkeit w des Gestänges 02 oder von um eigene Drehachsen 20 schwenkbar angeordneten Teilen des Gestänges 02, wie beispielsweise dessen Ausleger 21, 22, um die mindestens eine Drehachse 20 ermittelt werden kann.

Um die Drehgeschwindigkeit w des Gestänges 02 oder von um eigene Drehachsen 20 schwenkbar angeordneten Teilen des Gestänges 02, wie beispielsweise dessen Ausleger 21, 22, anhand einer Drehgeschwindigkeit des Trägerfahrzeugs 10 um dessen parallel zur Drehachse 20 verlaufende Längsachse und anhand einer Relativdrehung d_alpha1 zwischen Trägerfahrzeug 10 und Gestänge 02 beziehungsweise anhand von einer oder mehreren Relativdrehungen d_alpha1 zwischen Trägerfahrzeug 10 und um eigene Drehachsen 20 schwenkbar angeordneten Teilen des Gestänges 02, wie beispielsweise dessen Ausleger 21, 22, zu erfassen, kann vorgesehen sein, am Trägerfahrzeug 10 der Vorrichtung 01 einen Drehratensensor anzuordnen, um die auch als Wankrate bezeichnete Drehgeschwindigkeit des Trägerfahrzeugs 10 um dessen Längsachse zu erfassen, und einen Drehwinkelsensor oder Drehwinkelgeschwindkeitssensor zwischen Trägerfahrzeug 10 und Gestänge 02 beziehungsweise jeweils einen Drehwinkelsensor oder Drehwinkelgeschwindkeitssensor zwischen Trägerfahrzeug 10 und um eigene Drehachsen 20 schwenkbar angeordneten Teilen des Gestänges 02, wie beispielsweise dessen Ausleger 21, 22, vorzusehen.

Die Drehgeschwindigkeit w kann alternativ oder zusätzlich anhand einer zeitlichen Integration einer Drehbeschleunigung, und/oder anhand einer zeitlichen Integration einer vermittels translatorischer Beschleunigungen bestimmten Drehbeschleunigung erfasst werden.

Beispielsweise können, um die Drehgeschwindigkeit w zu erfassen, translatorische Beschleunigungen im Bereich der Ausleger 21, 22 des Gestänges 02, vorzugsweise an den gegenüberliegenden Enden 23, 24 der Ausleger 21, 22, erfasst werden, und anhand einer Differenz der translatorischen Beschleunigungen an den gegenüberliegenden Enden 23, 24 der Ausleger 21, 22 unter Kenntnis der auch als Arbeitsbreite bezeichneten Gestängebreite zunächst die Drehbeschleunigung des Gestänges 02 oder von um eigene Drehachsen 20 schwenkbar angeordneten Teilen des Gestänges 02, wie beispielsweise dessen Ausleger 21, 22, und durch zeitliche Integration wiederum die Drehgeschwindigkeit w berechnet werden.

Die Drehlage alpha1 des Gestänges 02 oder von um eigene Drehachsen 20 schwenkbar angeordneten Teilen des Gestänges 02, wie beispielsweise dessen Ausleger 21, 22, um die mindestens eine Drehachse 20 in Bezug auf die Referenzebene kann anhand eines Neigungswinkels alpha zwischen dem Gestänge 02 oder von um eigene Drehachsen 20 schwenkbar angeordneten Teilen des Gestänges 02, wie beispielsweise dessen Ausleger 21, 22, und der Horizontalen oder Vertikalen erfasst werden (Fig. 8).

Die Relativdrehung d_alpha1 zwischen Trägerfahrzeug 10 und Gestänge 02 beziehungsweise zwischen Trägerfahrzeug und um eigene Drehachsen 20 schwenkbar angeordneten Teilen des Gestänges 02, wie beispielsweise dessen Ausleger 21, 22, kann beispielsweise unmittelbar anhand eines Verdrehwinkels d_alpha1 zwischen Gestänge 02 und Trägerfahrzeug 10 oder indirekt anhand der Differenz zwischen der Drehlage alpha_g des Gestänges 02 um die Drehachse 20 in Bezug auf die Referenzebene und der Drehlage alpha_t des Trägerfahrzeugs 10 um dessen parallel zur Drehachse 20 verlaufende Längsachse in Bezug auf die Referenzebene erfasst werden. Die Differenz des von den Sensoren erfassten Winkels d_alpha1 zwischen dem Trägerfahrzeug 10 und der Referenzebene und des Winkels zwischen dem Gestänge und der Referenzebene einer Relativdrehung d_alpha1 zwischen Trägerfahrzeug 10 und Gestänge 02 proportional. Diese Relativdrehung d_alpha1 entspricht einer Neigung des Gestänges 02 oder von um eigene Drehachsen 20 schwenkbar angeordneten Teilen des Gestänges 02, wie beispielsweise dessen Ausleger 21, 22, in Bezug auf eine durch das Trägerfahrzeug 10, beispielsweise dessen langfristige Ausrichtung gebildete Referenzebene. Zur Erfassung der Drehlage alpha_g des Gestänges 02 oder von um eigene Drehachsen 20 schwenkbar angeordneten Teilen des Gestänges 02, wie beispielsweise dessen Ausleger 21, 22, um die mindestens eine Drehachse 20 in Bezug auf die Referenzebene und der Drehlage alpha_t des Trägerfahrzeugs 10 um dessen parallel zur mindestens einen Drehachse 20 verlaufende Längsachse in Bezug auf die Referenzebene können Neigungswinkel alpha_g zwischen dem Gestänge 02 und der Vertikalen und/oder der Horizontalen beziehungsweise Neigungswinkel alpha_t zwischen dem Trägerfahrzeug 10 und der Vertikalen und/oder der Horizontalen erfassende Neigungswinkelsensoren jeweils am Gestänge 02 und am Trägerfahrzeug 10 vorgesehen sein (Fig. 7).

Zur unmittelbaren Erfassung der Relativdrehung d_alpha1 kann ein Drehwinkelsensor zwischen Gestänge 02 oder um eigene Drehachsen 20 schwenkbar angeordneten Teilen des Gestänges 02, wie beispielsweise dessen Ausleger 21, 22, und Trägerfahrzeug 10 vorgesehen sein.

Anhand einer Fusion der vermittels einer erfassten Drehgeschwindigkeit w berechneten Drehlage alpha2 des Gestänges 02 oder von um eigene Drehachsen 20 schwenkbar angeordneten Teilen des Gestänges 02, wie beispielsweise dessen Ausleger 21, 22, mit einer berechneten und/oder erfassten Relativdrehung d_alpha1 zwischen Trägerfahrzeug 10 und Gestänge 02 oder von um eigene Drehachsen 20 schwenkbar angeordneten Teilen des Gestänges 02, wie beispielsweise dessen Ausleger 21, 22, wird Bezug genommen auf eine einer langfristigen Ausrichtung des Trägerfahrzeugs 10 entsprechende, ein gemitteltes Bodenprofil wiederspiegelnde, Referenzebene.

Anhand einer Fusion der vermittels einer erfassten Drehgeschwindigkeit w berechneten Drehlage alpha2 des Gestänges 02 oder von um eigene Drehachsen 20 schwenkbar angeordneten Teilen des Gestänges 02, wie beispielsweise dessen Ausleger 21, 22, mit einer durch Erfassung eines Winkels alpha zwischen dem Gestänge 02 oder um eigene Drehachsen 20 schwenkbar angeordneten Teilen des Gestänges 02, wie beispielsweise dessen Ausleger 21, 22, und der Referenzebene erfassten Drehlage alpha1 des Gestänges 02 oder von um eigene Drehachsen 20 schwenkbar angeordneten Teilen des Gestänges 02, wie beispielsweise dessen Ausleger 21, 22, wird Bezug genommen auf eine einem künstlichen Horizont entsprechende Referenzebene.

Zur Bestimmung der momentanen Drehlage alpha0 des Gestänges 02 oder von um eigene Drehachsen 20 schwenkbar angeordneten Teilen des Gestänges 02, wie beispielsweise dessen Ausleger 21, 22, um die mindestens eine Drehachse 20 in Bezug auf die Referenzebene anhand einer Fusion der anhand einer Drehgeschwindigkeit w berechneten Drehlage alpha2 des Gestänges 02 oder von um eigene Drehachsen 20 schwenkbar angeordneten Teilen des Gestänges 02, wie beispielsweise dessen Ausleger 21, 22, mit der direkt oder durch Differenzbildung indirekt erfassten Drehlage alpha1 oder d_alpha1 des Gestänges 02 oder von um eigene Drehachsen 20 schwenkbar angeordneten Teilen des Gestänges 02, wie beispielsweise dessen Ausleger 21, 22, ist vorzugsweise vorgesehen, eine Kalman-Filterung und/oder - um die Winkeldrift zu kompensieren - eine Tiefpassfilterung der erfassten Drehlage alpha1 beziehungsweise d_alpha1 sowie ein Vergleich der tiefpassgefilterten erfassten Drehlage alpha1 beziehungsweise d_alpha1 unter ständigem Abgleich auf Null mit der anhand einer Drehgeschwindigkeit w berechneten Drehlage alpha2 auszuführen.

Zur Erfassung der Drehgeschwindigkeit w wird hierbei bevorzugt mindestens ein Drehratensensor 25, 26 eingesetzt, der direkt auf dem Gestänge 02 wie bspw. auf dessen Mittelteil oder auf um eigene Drehachsen 20 schwenkbar angeordneten Teilen des Gestänges 02, wie beispielsweise dessen Ausleger 21, 22, montiert ist. Drehbewegungen des Trägerfahrzeuges 10 haben somit keinen Einfluss auf die Bestimmung der Drehgeschwindigkeit w des Gestänges 02 oder von um eigene Drehachsen 20 schwenkbar angeordneten Teilen des Gestänges 02, wie beispielsweise dessen Ausleger 21, 22. Ein der Messgröße proportionales oder diese wiederspiegelndes Ausgangssignal entspricht somit der Drehbewegung des Gestänges 02 oder von um eigene Drehachsen 20 schwenkbar angeordneten Teilen des Gestänges 02, wie beispielsweise dessen Ausleger 21, 22, bezogen auf eine beliebige Referenzebene, beispielsweise bezogen auf die Erdoberfläche bzw. orthogonal zur Erdbeschleunigung.

Wichtig ist zu erwähnen, dass zur Bestimmung der Drehgeschwindigkeit w vorzugsweise ein Drehratensensor 25, 26 eingesetzt wird, der direkt auf dem Gestänge 02 montiert ist. Dadurch haben Drehbewegungen des Trägerfahrzeugs 10 keinen Einfluss auf die Messung. Deren Messgröße entspricht somit der Drehbewegung des Gestänges bezogen auf die Erdoberfläche bzw. orthogonal zur Erdbeschleunigung.

Auch umfasst die Erfindung einen Drehratensensor 25, 26 auf einem Trägerfahrzeug 10 zur Messung der Drehbewegungen (Störbewegungen) des Trägerfahrzeugs, wobei zusätzlich die Relativdrehung d_alpha1 zwischen Trägerfahrzeug 10 und einem vorzugsweise als Spritzgestänge ausgebildeten Gestänge 02 durch einen als Drehwinkelgeber oder -sensor bezeichneten Winkelsensor oder einen als Drehratengeber oder -sensor bezeichneten Winkelgeschwindigkeitssensor gemessen werden kann, wobei aus beiden Messwerten die absolute Drehgeschwindigkeit w des Spritzgestänges ermittelt werden kann.

Demnach umfasst die Erfindung auch ein Trägerfahrzeug 10 mit einem daran montierten Gestänge 02 und einem Drehratensensor 25, 26.

Die Erfindung ist insbesondere im Bereich der Herstellung von landwirtschaftlichen Vorrichtungen zum Ausbringen von flüssigen und/oder festen Wirkstoffen gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Vorrichtung (01) zum Ausbringen von festen Wirkstoffen, umfassend:
- ein Trägerfahrzeug (10),
- mindestens ein zumindest um eine Drehachse (20) schwenkbar angeordnetes Gestänge (02, 21, 22),
- mindestens eine Sensoranordnung (25, 26) zur Erfassung einer Drehgeschwindigkeit (w) und/oder Beschleunigung des Gestänges (02, 21, 22) um die Drehachse (20) in Bezug auf eine Referenzebene,
- mindestens eine Sensoranordnung zur Erfassung einer Drehlage (alpha1, d_alpha1) des Gestänges (02, 21, 22) um die Drehachse (20) in Bezug auf die Referenzebene,
- eine Ausgangssignale (alpha0) der Sensoranordnungen zu Steuerungssignalen verarbeitende Regelungseinrichtung,
- zumindest einen in Abhängigkeit von Steuerungssignalen der Regelungseinrichtung die momentane Drehlage (alpha0) des Gestänges (02, 21, 22) um die Drehachse (20) beeinflussenden Aktor (03),
welcher Steuerungssignale in mechanische Bewegung oder eine andere physikalische Größe umsetzt, wobei damit eine ein Drehmoment auf das Gestänge (02, 21, 22) ausübende Kraft oder ein ein Drehmoment auf das Gestänge (02, 21, 22) ausübendes Kräftepaar erzeugt wird, und
wobei die Regelungseinrichtung zur Bestimmung einer Drehlage (alpha0) des Gestänges (02, 21, 22) um die Drehachse (20) in Bezug auf eine Anfangsausrichtung:
- durch zeitliche Integration der Drehgeschwindigkeit (w) zumindest eine Drehlage (alpha2) des Gestänges (02, 21, 22) in Bezug auf die Referenzebene berechnet.

2. Vorrichtung nach Anspruch 1, bei der die Regelungseinrichtung die anhand der Drehgeschwindigkeit (w) berechnete Drehlage (alpha2) mit der erfassten Drehlage (alpha1, d_alpha1) zur Bestimmung der momentanen Drehlage (alpha0) des Gestänges (02, 21, 22) in Bezug auf die Referenzebene fusioniert, um hieraus ein das Gestänge (02, 21, 22) aus dessen momentaner Drehlage (alpha0) in eine Soll-Drehlage in Bezug auf die Referenzebene rückführendes Steuerungssignal zu erzeugen.

3. Vorrichtung nach Anspruch 1 oder 2, wobei die mindestens eine Sensoranordnung zur Erfassung einer Drehgeschwindigkeit (w) des Gestänges (02, 21, 22) um die Drehachse (20) in Bezug auf eine Referenzebene mindestens einen am Gestänge (02, 21, 22) angeordneten Drehratensensor (25, 26) umfasst.

4. Vorrichtung nach einem der Ansprüche 1 bis 3, wobei die mindestens eine Sensoranordnung zur Erfassung einer Drehgeschwindigkeit (w) des Gestänges (02, 21, 22) um die Drehachse (20) in Bezug auf eine Referenzebene mindestens einen in wenigstens einem Endbereich (23, 24) des Gestänges (02, 21, 22) angeordneten Beschleunigungssensor (27, 28) umfasst.

5. Vorrichtung nach einem der Ansprüche 1 bis 4, wobei die mindestens eine Sensoranordnung zur Erfassung einer Drehgeschwindigkeit (w) des Trägerfahrzeuges (10) um die Drehachse (20) in Bezug auf eine Referenzebene mindestens einen am Trägerfahrzeug (10) angeordneten Drehratensensor umfasst.

6. Vorrichtung nach Anspruch 5, wobei die mindestens eine Sensoranordnung zur Erfassung einer Drehgeschwindigkeit (w) des Gestänges (02, 21, 22) um die Drehachse (20) in Bezug auf eine Referenzebene mindestens einen eine Relativdrehung (d_alpha1) zwischen Trägerfahrzeug (10) und Gestänge (02, 21, 22) erfassenden Drehwinkelsensor oder Drehwinkelgeschwindkeitssensor umfasst.

7. Vorrichtung nach einem der Ansprüche 4 bis 6, wobei die mindestens eine Sensoranordnung zur Erfassung einer Drehgeschwindigkeit (w) des Gestänges (02, 21, 22) um die Drehachse (20) in Bezug auf eine Referenzebene anstelle oder zusätzlich zu einem Drehratensensor (25, 26) einen Drehbeschleunigungssensor umfasst.

8. Vorrichtung nach einem der voranstehenden Ansprüche, wobei die mindestens eine Sensoranordnung zur Erfassung einer Drehlage (alpha1, d_alpha1) des Gestänges um die Drehachse (20) in Bezug auf die Referenzebene mindestens einen eine Relativdrehung (d_alpha1) zwischen Trägerfahrzeug (10) und Gestänge (02, 21, 22) erfassenden Sensor umfasst.

9. Vorrichtung nach Anspruch 8, wobei der wenigstens eine Sensor zur Erfassung einer Relativdrehung (d_alpha1) zwischen Trägerfahrzeug (10) und Gestänge (02, 21, 22):
- wenigstens einen zwischen dem Gestänge (02, 21, 22) und dem Trägerfahrzeug (10) angeordneten Drehwinkelsensor und/oder
- wenigstens einen einen Winkel (alpha_t) zwischen dem Trägerfahrzeug (10) und der Referenzebene erfassenden Neigungssensor und zumindest einen einen Winkel (alpha_g) zwischen dem Gestänge (02, 21, 22) und der Referenzebene erfassenden Neigungssensor
umfasst.

10. Vorrichtung nach einem der voranstehenden Ansprüche, wobei die mindestens eine Sensoranordnung zur Erfassung einer Drehlage (alpha1, d_alpha1) des Gestänges (02, 21, 22) um die Drehachse (20) in Bezug auf die Referenzebene zumindest einen einen Winkel (alpha) zwischen dem Gestänge (02, 21, 22) und der Referenzebene erfassenden Neigungssensor umfasst.

11. Vorrichtung nach einem der voranstehenden Ansprüche, wobei die Regelungseinrichtung:
- eine Kalman-Filterung ausführende Mittel umfasst, und/oder
- Mittel zur Tiefpassfilterung der sensorisch erfassten Drehlage (alpha1, d_alpha1) sowie Mittel zum Vergleich der tiefpassgefilterten sensorisch erfassten Drehlage (alpha1, d_alpha1) unter ständigem Abgleich auf Null mit der anhand einer Drehgeschwindigkeit (w) berechneten Drehlage (alpha2) umfasst.

12. Verfahren zur Steuerung einer Vorrichtung nach einem der Ansprüche 1 bis 11 anhand einer Regelung der Drehlage des um eine Drehachse (20) beweglich an einem Trägerfahrzeug (10) angeordneten Gestänges (02, 21, 22) in Abhängigkeit von einer momentanen Drehlage (alpha0), wobei zur Bestimmung der momentanen Drehlage (alpha0) vorgesehen ist:
- eine Drehgeschwindigkeit (w) des Gestänges (02, 21, 22) um die Drehachse (20) in Bezug auf eine Referenzebene zu erfassen,
- eine Drehlage (alpha1, d_alpha1) des Gestänges (02, 21, 22) um die Drehachse (20) in Bezug auf die Referenzebene zu erfassen,
- wobei Steuersignale in mechanische Bewegung oder eine andere physikalische Größe umgesetzt werden und damit eine ein Drehmoment auf das Gestänge (02, 21, 22) ausübende Kraft oder ein ein Drehmoment auf das Gestänge (02, 21, 22) ausübende Kräftepaar erzeugt wird.

13. Verfahren nach Anspruch 12, wobei zur Bestimmung der momentanen Drehlage (alpha0) vorgesehen ist:
- durch zeitliche Integration der Drehgeschwindigkeit (w) eine Drehlage (alpha2) des Gestänges (02, 21, 22) in Bezug auf die Referenzebene zu berechnen, und
- die anhand der Drehgeschwindigkeit (w) berechnete Drehlage (alpha2) des Gestänges (02, 21, 22) mit der erfassten Drehlage (alpha1, d_alpha1) des Gestänges (02, 21, 22) zur Bestimmung der momentanen Drehlage (alpha0) des Gestänges (02, 21, 22) in Bezug auf die Referenzebene zu fusionieren.

14. Verfahren nach Anspruch 12 oder 13, wobei anhand der Fusion der vermittels der Drehgeschwindigkeit (w) berechneten Drehlage (alpha2) des Gestänges (02, 21, 22) mit der erfassten Drehlage (alpha1, d_alpha1) des Gestänges (02, 21, 22) jeweils bezogen auf die Referenzebene ein das Gestänge (02, 21, 22) aus dessen momentaner Drehlage (alpha0) in eine Soll-Drehlage in Bezug auf die Referenzebene rückführendes Steuerungssignal erzeugt wird.

15. Verfahren nach einem der Ansprüche 12 bis 14, wobei:
- die Drehgeschwindigkeit (w) anhand mindestens eines am Gestänge (02, 21, 22) angeordneten, die Drehgeschwindigkeit (w) des Gestänges (02, 21, 22) erfassenden Drehratensensors (25, 26) erfasst wird, und/oder
- die Drehgeschwindigkeit (w) des Gestänges (02, 21, 22) anhand einer Drehgeschwindigkeit des Trägerfahrzeugs (10) um dessen parallel zur Drehachse (20) verlaufende Längsachse und anhand einer Relativdrehung (d_alpha1) zwischen Trägerfahrzeug (10) und Gestänge (02, 21, 22) erfasst wird, und/oder
- die Drehgeschwindigkeit (w) anhand einer zeitlichen Integration einer Drehbeschleunigung erfasst wird, und/oder
- die Drehgeschwindigkeit (w) anhand einer zeitlichen Integration einer vermittels translatorischer Beschleunigungen (25, 26) bestimmten Drehbeschleunigung erfasst wird, und/oder
- die Drehlage (alpha1) des Gestänges (02, 21, 22) um die Drehachse (20) in Bezug auf die Referenzebene anhand eines Neigungswinkels (alpha) zwischen dem Gestänge (02, 21, 22) und der Horizontalen oder Vertikalen erfasst wird.

16. Verfahren nach einem der Ansprüche 12 bis 15, wobei:
- anhand einer Fusion der vermittels einer erfassten Drehgeschwindigkeit (w) berechneten Drehlage (alpha2) des Gestänges (02, 21, 22) mit einer Relativdrehung zwischen Trägerfahrzeug (10) und Gestänge (02, 21, 22) Bezug genommen wird auf eine einer langfristigen Ausrichtung des Trägerfahrzeugs (10) entsprechende Referenzebene,
oder
- anhand einer Fusion der vermittels einer erfassten Drehgeschwindigkeit (w) berechneten Drehlage (alpha2) des Gestänges mit einer durch Erfassung eines Winkels (alpha) zwischen dem Gestänge (02, 21, 22) und der Referenzebene erfassten Drehlage (alpha1) des Gestänges (02, 21, 22) Bezug genommen wird auf eine einem künstlichen Horizont entsprechende Referenzebene.

17. Verfahren nach einem der Ansprüche 12 bis 16, wobei zur Bestimmung der momentanen Drehlage (alpha0) des Gestänges (02, 21, 22) um die Drehachse (20) in Bezug auf die Referenzebene anhand einer Fusion der anhand einer Drehgeschwindigkeit (w) berechneten Drehlage (alpha2) des Gestänges (02, 21, 22) mit der direkt oder durch Differenzbildung indirekt erfassten Drehlage (alpha1, d_alpha1) des Gestänges (02, 21, 22):
- eine Kalman-Filterung
und/oder
- eine Tiefpassfilterung der erfassten Drehlage (alpha1, d_alpha1) sowie ein Vergleich der tiefpassgefilterten erfassten Drehlage (alpha1, d_alpha1) unter ständigem Abgleich auf Null mit der anhand einer Drehgeschwindigkeit (w) berechneten Drehlage (alpha2)
ausgeführt wird.

## Claims

1. Device (01) for spreading solid active agents, comprising:
- a carrier vehicle (10),
- at least one boom (02, 21, 22) arranged pivotably about at least one rotation axis (20),
- at least one sensor arrangement (25, 26) for the detection of an angular velocity (w) and/or acceleration of the boom (02, 21, 22) about the rotation axis (20) in relation to a reference plane,
- at least one sensor arrangement for the detection of an angular position (alpha1, d_alpha1) of the boom (02, 21, 22) about the rotation axis (20) in relation to the reference plane,
- a control unit processing output signals (alpha0) of the sensor arrangements to control signals,
- at least one actuator (03) acting on the present angular position (alpha0) of the boom (02, 21, 22) about the rotation axis (20) in dependence on control signals from the control unit, which converts control signals into mechanical motion or another physical quantity, thus producing a force, which exerts a torque on the boom (02, 21, 22) or a force couple, which exerts a torque on the boom (02, 21, 22), and wherein, for the purpose of determining an angular position (alpha0) of the boom (02, 21, 22) about the rotation axis (20) in relation to an initial alignment:
- wherein the control unit calculates at least one angular position (alpha2) of the boom (02, 21, 22) in relation to the reference plane by means of time integration of the angular velocity (w).

2. The device according to claim 1, wherein the control unit fuses the angular position (alpha2) of the boom (02, 21, 22), which is calculated based on the angular velocity (w), with the detected angular position (alpha1, d_alpha1) of the boom (02, 21, 22), for the purpose of determining the present angular position (alpha0) of the boom (02, 21, 22) in relation to the reference plane, in order to generate a control signal from the determined present angular position which returns the boom (02, 21, 22) from the present angular position (alpha0) to a desired angular position in relation to the reference plane.

3. The device according to claims 1 or 2, wherein the at least one sensor arrangement for the detection of an angular velocity (w) of the boom (02, 21, 22) about the rotation axis (20) in relation to a reference plane comprises at least one angular rate sensor (25, 26), which is arranged at the boom (02, 21, 22).

4. The device according to claims 1 to 3, wherein the at least one sensor arrangement for the detection of an angular velocity (w) of the boom (02, 21, 22) about the rotation axis (20) in relation to a reference plane comprises at least one acceleration sensor (27, 28), which is arranged in at least one end section (23, 24) of the boom (02, 21, 22).

5. The device according to claims 1 to 4, wherein the at least one sensor arrangement for the detection of an angular velocity (w) of the carrier vehicle (10) about the rotation axis (20) in relation to a reference plane comprises at least one angular rate sensor, which is arranged at the carrier vehicle

6. The device according to claim 5, wherein the at least one sensor arrangement for the detection of an angular velocity (w) of the boom (02, 21, 22) about the rotation axis (20) in relation to a reference plane comprises at least one angle of rotation sensor or rotational angular velocity sensor, which detects a relative rotation (d_alpha 1) between the carrier vehicle (10) and the boom (02, 21, 22).

7. The device according to claims 4 to 6, wherein the at least one sensor arrangement for the detection of an angular velocity (w) of the boom (02, 21, 22) about the rotation axis (20) in relation to a reference plane comprises an angular acceleration sensor instead of or in addition to an angular rate sensor (25, 26).

8. The device according to one of the preceding claims, wherein the at least one sensor arrangement for the detection of an angular position (alpha1, d_alpha1) of the boom (02, 21, 22) about the rotation axis in relation to the reference plane comprises at least one sensor, which detects a relative rotation (d_alpha1) between the carrier vehicle (10) and the boom (02, 21, 22).

9. The device according to claim 8, wherein the at least one sensor for the detection of a relative rotation (d_alpha1) between carrier vehicle (10) and boom (02, 21, 22) comprises:
- at least one angle of rotation sensor arranged between the boom (02, 21, 22) and the carrier vehicle (10), and/or
- at least one tilt sensor, which detects an angle (alpha_t) between the carrier vehicle (10) and the reference plane, and at least one tilt sensor, which detects an angle (alpha_g) between the boom (02, 21, 22) and the reference plane.

10. The device according to one of the preceding claims, wherein the at least one sensor arrangement for the detection of an angular position (alpha1, d_alpha1) of the boom (02, 21, 22) about the rotation axis (20) in relation to the reference plane comprises at least one tilt sensor, which detects an angle (alpha) between the boom (02, 21, 22) and the reference plane.

11. The device according to one of the preceding claims wherein the control unit:
- comprises means which carry out a Kalman filtering, and/or
- comprises means for the low-pass filtering of the sensor-detected angular position (alpha1, d_alpha1) as well as means for the comparison under continuous zero balance of the low-pass filtered, sensor-detected angular position (alpha1, d_alpha1) with the angular position (alpha2), which is calculated by means of an angular velocity (w).

12. Method for the control of a device as recited in any one of claims 1 to 11 by means of regulation of the angular position of the boom, wherein, for the purpose of determining the present angular position (alpha 0), it is provided:
- to detect an angular velocity (w) of the boom about the rotation axis in relation to a reference plane;
- to detect an angular position (alpha1, d_alpha1) of the boom about the rotation axis in relation to a reference plane;
- wherein control signals are converted into mechanical motion or another physical quantity, thus producing a force, which exerts a torque on the boom (02, 21, 22) or a force couple, which exerts a torque on the boom (02, 21, 22);.

13. The method according to claim 12, wherein for determining the present angular position (alpha0) is provided:
- to calculate an angular position (alpha2) of the boom (02, 21, 22) in relation to the reference plane by means of time integration of the angular velocity (w), and
- to fuse the angular position (alpha2) of the boom (02, 21, 22), which angular position (alpha2) is calculated by means of the angular velocity (w), with the detected angular position (alpha1, d_alpha1) of the boom (02, 21, 22) for the purpose of determining the present angular position (alpha0) of the boom (02, 21, 22) in relation to the reference plane.

14. The method according to claims 12 or 13, wherein, by way of the fusing of the angular position (alpha2) of the boom (02, 21, 22), which angular position (alpha2) is calculated by means of the angular velocity (w), with the detected angular position (alpha1, d_alpha1) of the boom (02, 21, 22), in each case in relation to the reference plane, a control signal is generated from the present angular position (alpha0) of the boom (02, 21, 22), which control signal returns the boom (02, 21, 22) to a desired angular position in relation to the reference plane.

15. The method according to claims 12 to 14 wherein:
- the angular velocity (w) is detected by means of at least one angular rate sensor, which is arranged at the boom (02, 21, 22) and which detects the angular velocity (w) of the boom (02, 21, 22); and/or
-- the angular velocity (w) of the boom (02, 21, 22) is detected by means of an angular velocity of the carrier vehicle (10) about its longitudinal axis, which runs parallel to the rotation axis (20), and by means of a relative rotation (d_alpha1) between the carrier vehicle (10) and the boom (02, 21, 22); and/or
- the angular velocity (w) is detected by means of a time integration of an angular acceleration; and/or
- the angular velocity (w) is detected by way of a time integration of an angular acceleration, which is determined by means of translational accelerations (25, 26); and/or
- the angular position (alpha1) of the boom (02, 21, 22) about the rotation axis (20) in relation to the reference plane is detected by means of a tilt angle (alpha) between the boom (02, 21, 22) and the horizontal or the vertical.

16. The method according to claims 12 to 15 wherein:
- by way of fusing the angular position (alpha2) of the boom (02, 21, 22), which angular position (alpha2) is calculated by means of a detected angular velocity (w), with a relative rotation between carrier vehicle (10) and boom (02, 21, 22), reference is taken to a reference plane corresponding to a long-term alignment of the carrier vehicle (10);
or
- by way of fusing the angular position (alpha 2) of the boom (02, 21, 22), which angular position (alpha2) is calculated by means of a detected angular velocity (w), with an angular position (alpha1) of the boom (02, 21, 22), which angular position (alpha1) is detected by the detection of an angle (alpha) between the boom (02, 21, 22) and the reference plane, reference is taken to a reference plane corresponding to an artificial horizon.

17. The method according to claims 12 to 16, wherein, for the purpose of determining the present angular position (alpha0) of the boom (02, 21, 22) about the rotation axis in relation to the reference plane by way of fusing the angular position (alpha 2) of the boom (02, 21, 22), which angular position (alpha2) is calculated by means of an angular velocity (w), with the angular position (alpha1, d_alpha1) of the boom (02, 21, 22), which is directly detected or indirectly detected by difference formation:
- a Kalman filtering
and/or
- a low-pass filtering of the detected angular position (alpha1, d_alpha1) as well as a comparison under continuous zero balance of the low-pass filtered, detected angular position (alpha1, d_alpha1) with the angular position (alpha2), which is calculated by means of an angular velocity (w) is carried out.

## Revendications

1. Dispositif (01) d'épandage de principes actifs solides, comprenant :
- un véhicule porteur (10),
- au moins une rampe (02, 21, 22) disposée de façon à pouvoir pivoter au moins autour d'un axe de rotation (20),
- au moins un ensemble de capteur(s) (25, 26) destiné à détecter une vitesse de rotation (w) et/ou une accélération de la rampe (02, 21, 22) autour de l'axe de rotation (20) par rapport à un plan de référence,
- au moins un ensemble de capteur(s) destiné à détecter une position de rotation (alpha1, dalphal) de la rampe (02, 21, 22) autour de l'axe de rotation (20) par rapport au plan de référence,
- un dispositif de régulation traitant des signaux de sortie (alpha0) des ensembles de capteur(s) pour donner des signaux de commande,
- au moins un actionneur (03) influant sur la position de rotation instantanée (alpha0) de la rampe (02, 21, 22) autour de l'axe de rotation (20) en fonction de signaux de commande du dispositif de régulation, qui transforme des signaux de commande en mouvement mécanique ou une autre grandeur physique, une force exerçant un couple sur la rampe (02, 21, 22) ou une paire de forces exerçant un couple sur la rampe (02, 21, 22) étant ainsi générée, et dans lequel, pour déterminer une position de rotation (alpha0) de la rampe (02, 21, 22) autour de l'axe de rotation (20) par rapport à une orientation initiale, ledit dispositif de régulation :
- calcule, par intégration temporelle de la vitesse de rotation (w), au moins une position de rotation (alpha2) de la rampe (02, 21, 22) par rapport au plan de référence.

2. Dispositif selon la revendication 1, dans lequel ledit dispositif de régulation fusionne la position de rotation (alpha2) calculée à partir de la vitesse de rotation (w) avec la position de rotation détectée (alpha1, dalphal) pour déterminer la position de rotation instantanée (alpha0) de la rampe (02, 21, 22) par rapport au plan de référence, afin de générer à partir de cela un signal de commande ramenant la rampe (02, 21, 22) de sa position de rotation instantanée (alpha0) dans une position de rotation de consigne par rapport au plan de référence.

3. Dispositif selon la revendication 1 ou 2, dans lequel ledit au moins un ensemble de capteur(s) destiné à détecter une vitesse de rotation (w) de la rampe (02, 21, 22) autour de l'axe de rotation (20) par rapport à un plan de référence comprend au moins un capteur de taux de rotation (25, 26) disposé sur la rampe (02, 21, 22).

4. Dispositif selon l'une quelconque des revendications 1 à 3, dans lequel ledit au moins un ensemble de capteur(s) destiné à détecter une vitesse de rotation (w) de la rampe (02, 21, 22) autour de l'axe de rotation (20) par rapport à un plan de référence comprend au moins un capteur d'accélération (27, 28) disposé dans au moins une zone d'extrémité (23, 24) de la rampe (02, 21, 22).

5. Dispositif selon l'une quelconque des revendications 1 à 4, dans lequel ledit au moins un ensemble de capteur(s) destiné à détecter une vitesse de rotation (w) du véhicule porteur (10) autour de l'axe de rotation (20) par rapport à un plan de référence comprend au moins un capteur de taux de rotation disposé sur le véhicule porteur (10).

6. Dispositif selon la revendication 5, dans lequel ledit au moins un ensemble de capteur(s) destiné à détecter une vitesse de rotation (w) de la rampe (02, 21, 22) autour de l'axe de rotation (20) par rapport à un plan de référence comprend au moins un capteur d'angle de rotation ou capteur de vitesse d'angle de rotation détectant une rotation relative (d_alpha1) entre le véhicule porteur (10) et la rampe (02, 21, 22).

7. Dispositif selon l'une quelconque des revendications 4 à 6, dans lequel ledit au moins un ensemble de capteur(s) destiné à détecter une vitesse de rotation (w) de la rampe (02, 21, 22) autour de l'axe de rotation (20) par rapport à un plan de référence comprend un capteur d'accélération de rotation au lieu ou en plus d'un capteur de taux de rotation (25, 26).

8. Dispositif selon l'une quelconque des revendications précédentes, dans lequel ledit au moins un ensemble de capteur(s) destiné à détecter une position de rotation (alpha1, d_alpha1) de la rampe autour de l'axe de rotation (20) par rapport au plan de référence comprend au moins un capteur détectant une rotation relative (d_alpha1) entre le véhicule porteur (10) et la rampe (02, 21, 22).

9. Dispositif selon la revendication 8, dans lequel ledit au moins un capteur destiné à détecter une rotation relative (d_alpha1) entre le véhicule porteur (10) et la rampe (02, 21, 22) comprend :
- au moins un capteur d'angle de rotation disposé entre la rampe (02, 21, 22) et le véhicule porteur (10) et/ou
- au moins un capteur d'inclinaison détectant un angle (alpha t) entre le véhicule porteur (10) et le plan de référence ainsi qu'au moins un capteur d'inclinaison détectant un angle (alpha_g) entre la rampe (02, 21, 22) et le plan de référence.

10. Dispositif selon l'une quelconque des revendications précédentes, dans lequel ledit au moins un ensemble de capteur(s) destiné à détecter une position de rotation (alpha1, dalphal) de la rampe (02, 21, 22) autour de l'axe de rotation (20) par rapport au plan de référence comprend au moins un capteur d'inclinaison détectant un angle (alpha) entre la rampe (02, 21, 22) et le plan de référence.

11. Dispositif selon l'une quelconque des revendications précédentes, dans lequel ledit dispositif de régulation :
- comprend des moyens mettant en œuvre un filtrage Kalman, et/ou
- comprend des moyens de filtrage passe-bas de la position de rotation (alphal, d_alpha1) détectée par capteur ainsi que des moyens destinés à comparer, avec une compensation permanente à zéro, la position de rotation (alpha1, dalphal) détectée par capteur et filtrée passe-bas avec la position de rotation (alpha2) calculée à partir d'une vitesse de rotation (w).

12. Procédé de commande d'un dispositif selon l'une quelconque des revendications 1 à 11, à l'aide d'une régulation de la position de rotation de la rampe (02, 21, 22) disposée sur un véhicule porteur (10) de façon à être mobile autour d'un axe de rotation (20), en fonction d'une position de rotation instantanée (alpha0), dans lequel, pour déterminer la position de rotation instantanée (alpha0), il est prévu :
- de détecter une vitesse de rotation (w) de la rampe (02, 21, 22) autour de l'axe de rotation (20) par rapport à un plan de référence,
- de détecter une position de rotation (alpha1, dalphal) de la rampe (02, 21, 22) autour de l'axe de rotation (20) par rapport au plan de référence,
- dans lequel des signaux de commande sont transformés en mouvement mécanique ou une autre grandeur physique, et une force exerçant un couple sur la rampe (02, 21, 22) ou une paire de forces exerçant un couple sur la rampe (02, 21, 22) est ainsi générée.

13. Procédé selon la revendication 12, dans lequel, pour déterminer la position de rotation instantanée (alpha0), il est prévu :
- de calculer, par intégration temporelle de la vitesse de rotation (w), une position de rotation (alpha2) de la rampe (02, 21, 22) par rapport au plan de référence, et
- de fusionner la position de rotation (alpha2) de la rampe (02, 21, 22), calculée à partir de la vitesse de rotation (w), avec la position de rotation (alpha1, d_alpha1) détectée de la rampe (02, 21, 22) pour déterminer la position de rotation instantanée (alpha0) de la rampe (02, 21, 22) par rapport au plan de référence.

14. Procédé selon la revendication 12 ou 13, dans lequel un signal de commande ramenant la rampe (02, 21, 22) de sa position de rotation instantanée (alpha0) dans une position de rotation de consigne par rapport au plan de référence est généré à l'aide de la fusion de la position de rotation (alpha2) de la rampe (02, 21, 22), calculée par l'intermédiaire de la vitesse de rotation (w), avec la position de rotation (alpha1, d_alpha1) détectée de la rampe (02, 21, 22), respectivement par rapport au plan de référence.

15. Procédé selon l'une quelconque des revendications 12 à 14, dans lequel :
- la vitesse de rotation (w) est détectée au moyen d'au moins un capteur de taux de rotation (25, 26) qui est disposé sur la rampe (02, 21, 22) et détecte la vitesse de rotation (w) de la rampe (02, 21, 22), et/ou
- la vitesse de rotation (w) de la rampe (02, 21, 22) est déterminée à partir de la vitesse de rotation du véhicule porteur (10) autour de son axe longitudinal parallèle à l'axe de rotation (20) et à partir d'une rotation relative (d_alpha1) entre le véhicule porteur (10) et la rampe, et/ou
- la vitesse de rotation (w) est détectée à partir d'une intégration temporelle d'une accélération de rotation, et/ou
- la vitesse de rotation (w) est détectée à partir d'une intégration temporelle d'une accélération de rotation déterminée par l'intermédiaire d'accélérations de translation (25, 26), et/ou
- la position de rotation (alpha1) de la rampe (02, 21, 22) autour de l'axe de rotation (20) par rapport au plan de référence est détectée à partir d'un angle d'inclinaison (alpha) entre la rampe (02, 21, 22) et l'horizontale ou la verticale.

16. Procédé selon l'une quelconque des revendications 12 à 15, dans lequel :
- à l'aide d'une fusion de la position de rotation (alpha2) de la rampe (02, 21, 22), calculée par l'intermédiaire d'une vitesse de rotation (w) détectée, avec une rotation relative entre le véhicule porteur (10) et la rampe (02, 21, 22), on fait référence à un plan de référence correspondant à une orientation à long terme du véhicule porteur (10),
ou
- à l'aide d'une fusion de la position de rotation (alpha2) de la rampe, calculée par l'intermédiaire d'une vitesse de rotation (w) détectée, avec une position de rotation (alpha1) de la rampe (02, 21, 22), détectée par détection d'un angle (alpha) entre la rampe (02, 21, 22) et le plan de référence, on fait référence à un plan de référence correspondant à un horizon artificiel.

17. Procédé selon l'une quelconque des revendications 12 à 16, dans lequel, pour la détermination de la position de rotation instantanée (alpha0) de la rampe (02, 21, 22) autour de l'axe de rotation (20) par rapport au plan de référence à partir d'une fusion de la position de rotation (alpha2) de la rampe (02, 21, 22), calculée à partir d'une vitesse de rotation (w), avec la position de rotation (alpha1, dalphal) de la rampe (02, 21, 22), détectée directement ou indirectement par formation de la différence, on met en œuvre :
- un filtrage Kalman
et/ou
- un filtrage passe-bas de la position de rotation (alpha1, d_alpha1) détectée ainsi qu'une comparaison, avec une compensation permanente à zéro, de la position de rotation (alphal, d_alpha1) détectée et filtrée passe-bas avec la position de rotation (alpha2) calculée à partir d'une vitesse de rotation (w).
